# EUROPEAN PATENT APPLICATION

(11) **EP 4 550 106 A1**
(43) Date of publication of application: **07.05.2025**
(21) Application number: 23879121.4
(22) Date of filing: 17.10.2023
(51) Int. Cl.: G06F 3/06

(54) **DISTRIBUTED DATA MANAGEMENT METHOD, ELECTRONIC DEVICE AND SYSTEM**

(30) Priority: 21.10.2022 CN 202211296953
(71) Applicant: Huawei Technologies Co., Ltd., Shenzhen, Guangdong 518129 (CN)
(72) Inventor: LI, Youfu, Shenzhen, Guangdong 518129 (CN); DU, Lei, Shenzhen, Guangdong 518129 (CN); GONG, Ashi, Shenzhen, Guangdong 518129 (CN); LI, Shijun, Shenzhen, Guangdong 518129 (CN)
(74) Representative: Epping - Hermann - Fischer
(86) International application number: PCT/CN2023/125064
(87) International publication number: WO 2024/083133

(57) **Abstract**

This application provides a distributed data management method, an electronic device, and a system, and relates to the field of terminal technologies, to relieve storage pressure of a device in a distributed system. The method includes: displaying a first interface, where the first interface includes identifiers of one or more to-be-migrated devices; sending a first file to a second electronic device in response to an operation of determining an identifier of the second electronic device from the identifiers of the one or more to-be-migrated devices by a user, where the first electronic device and the one or more to-be-migrated devices are located in a same electronic device group; retaining metadata corresponding to the first file, where the metadata is used to identify that the first file has been migrated to the second electronic device; displaying a second interface based on the metadata of the first file, where the second interface includes an identifier of a folder corresponding to the second electronic device; and displaying, in response to an operation performed by the user on the identifier of the folder of the second electronic device in the second electronic device, information about the file migrated from the first electronic device to the second electronic device.

## Description

This application claims priority to Chinese Patent Application No. 202211296953.8, filed with the China National Intellectual Property Administration on October 21, 2022 and entitled "DISTRIBUTED DATA MANAGEMENT METHOD, ELECTRONIC DEVICE, AND SYSTEM", which is incorporated herein by reference in its entirety.

### TECHNICAL FIELD

This application relates to the field of terminal technologies, and in particular, to a distributed data management method, an electronic device, and a system.

### BACKGROUND

Currently, users may use electronic devices such as a mobile phone to implement various functions. As use time of the mobile phone increases, more files are locally stored on the mobile phone, and the mobile phone cannot release storage space. As a result, available storage space is reduced, and user experience is severely affected.

Therefore, how to release storage space of the electronic devices such as the mobile phone is a technical problem that needs to be urgently resolved.

### SUMMARY

This application provides a distributed data management method, an electronic device, and a system, to relieve storage pressure of a device in a distributed system.

To achieve the foregoing objective, this application provides the following technical solutions. According to a first aspect, this application provides a distributed data management method, applied to a first electronic device or a component (for example, a chip system) that can implement a function of the first electronic device, where the method includes:
displaying a first interface, where the first interface includes identifiers of one or more to-be-migrated devices;
sending a first file to a second electronic device in response to an operation of determining an identifier of the second electronic device from the identifiers of the one or more to-be-migrated devices by a user, so that the second electronic device receives and stores the first file, where the first electronic device and the one or more to-be-migrated devices are located in a same electronic device group;
retaining metadata corresponding to the first file, where the metadata is used to identify that the first file has been migrated to the second electronic device;
displaying a second interface based on the metadata of the first file, where the second interface includes an identifier of a folder corresponding to the second electronic device; and
displaying, in response to an operation performed by the user on the identifier of the folder of the second electronic device in the second electronic device, information about the file migrated from the first electronic device to the second electronic device.

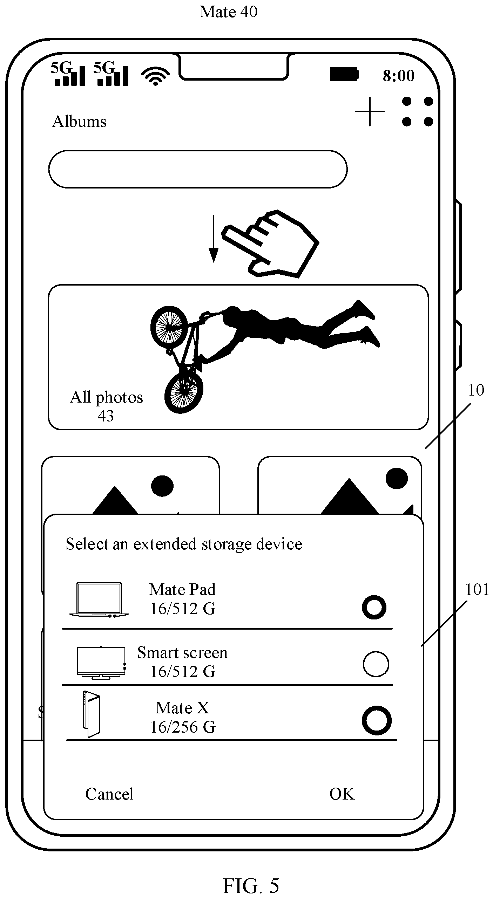

For example, as shown in FIG. 5, a mobile phone 1 displays an interface 10 (an example of the first interface). The interface 10 includes a card 101, and the card 101 includes identifiers of a Mate Pad, a smart screen, and a Mate X (information about one or more second electronic devices). After detecting that a user taps the identifiers of the Mate Pad and the Mate X, the mobile phone sends the first file to the Mate Pad and the Mate X, so that the Mate Pad and the Mate X receive and store the first file.

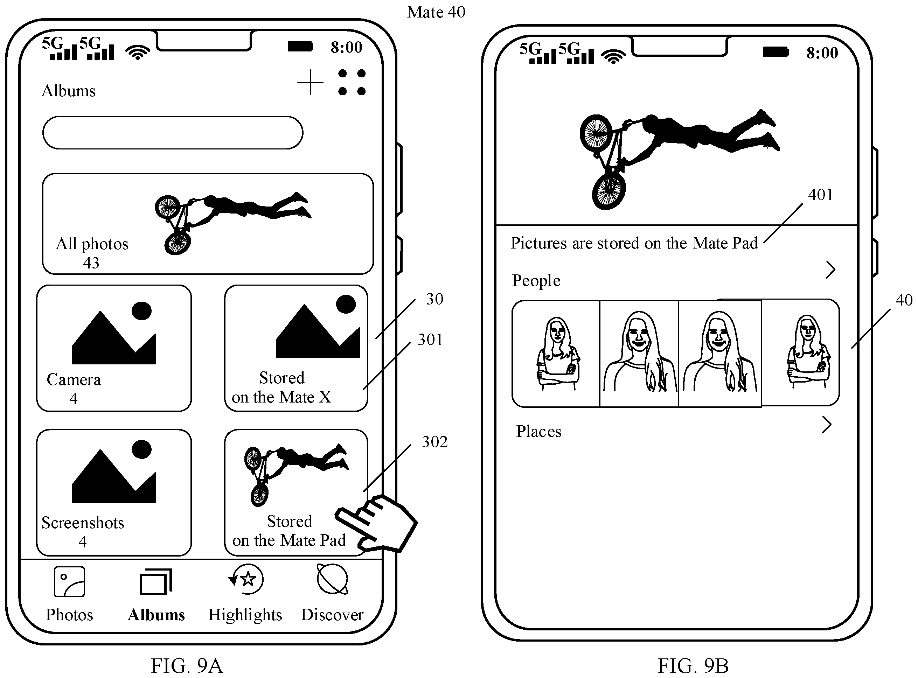

Then, as shown in FIG. 9A, the mobile phone 1 displays an interface 30 (an example of the second interface). The interface 30 includes a folder 302 corresponding to the Mate Pad and a folder 301 corresponding to the Mate X. In response to a tap operation performed by the user on the folder 302 corresponding to the Mate Pad, as shown in FIG. 9B, the mobile phone 1 displays information (for example, thumbnails of four photos shown in the figure) about the file migrated from the mobile phone to the Mate Pad.

In the foregoing technical solution, the first electronic device may determine one or more appropriate second electronic devices in the electronic device group, and migrate the local first file to another device in the same electronic device group. In this way, storage pressure of the first electronic device can be effectively relieved while user experience is ensured, and smoothness of the electronic device can be improved.

In addition, although the first file has been migrated from the local device, because the first electronic device still locally stores the metadata of the first file, the second interface may be displayed by using the local metadata. The user may view, by operating the second interface, the information (for example, a picture) about the first file that has been migrated to the second electronic device, to implement local normal browsing of the information about the first file. It can be learned that the first electronic device can migrate the first file without affecting local browsing as much as possible, to effectively relieve storage pressure of the first electronic device.

In a possible design, the method further includes:
determining, based on an access habit of the user for a local file, the first file that is infrequently used by the user.

In a related technology, a file is migrated according to a fixed rule. For example, only data browsed in recent 30 days is locally stored, and another photo/video is migrated to a cloud. By comparison, in the technical solution of this application, the access habit of the user can be dynamically determined, and a range of cold data (for example, an infrequently-used photo) that is infrequently accessed by the user can be dynamically determined based on the access habit of the user, to intelligently migrate the cold data. Because the cold data is determined based on the data access habit of the user, data that the user prefers to access can be prevented, as much as possible, from being used as cold data, to reduce a probability of incorrectly migrating the data that the user prefers to access.

In a possible design, the sending a first file to a second electronic device includes: sending the first file to the second electronic device when storage space of the first electronic device is insufficient. In other words, when the storage space of the first electronic device is insufficient, the local first file can be migrated to another device in the same electronic device group, to relieve storage pressure of the first electronic device.

In a possible design, the method further includes:
when there is remaining storage space, receiving a second file from the second electronic device, and storing the second file.

For example, the first electronic device is a mobile phone, and the second electronic device is a hard disk. When storage space of the mobile phone is insufficient, the mobile phone may migrate local data (for example, cold data) to the hard disk in the same electronic device group. When the storage space of the mobile phone is sufficient, the mobile phone may alternatively receive cold data migrated from the hard disk. In this way, storage space utilization of devices in the same electronic device group can be improved, and idle storage space can be avoided. In addition, storage pressure of some devices in the electronic device group can be effectively relieved.

In a possible design, the method further includes:
obtaining device information of a plurality of electronic devices in the electronic device group, and determining the one or more to-be-migrated devices from the plurality of electronic devices based on the device information of the plurality of electronic devices.

The device information includes any one or more pieces of the following information: a device type, a device name, remaining storage space, and a device role.

For example, the mobile phone 1 (an example of the first electronic device) may determine, based on information about a device in a network according to any one or more of the following rules, a target device used to store the local infrequently-used file.
(1) A device whose device type is a large-capacity storage device is preferentially selected as the target device. The large-capacity storage device includes but is not limited to a home storage center and the like. In this way, because this type of storage device has a large amount of available storage space and is insensitive to power consumption, impact of the cold data on performance of the storage device can be reduced as much as possible.
(2) Total remaining storage space of one or more target devices is greater than or equal to storage space required by the cold data.
(3) A personal device like a mobile phone or a tablet with a same account is preferentially selected as the target device. If no personal device exists in the current network or remaining storage space of the personal device is insufficient, a public device like the smart screen may be selected as the target device.
(4) A source device (namely, a device from which data is migrated) cannot be used as the target device (namely, a device to which data is migrated). It is considered that an infrequently-used file that is stored on the source device is migrated only when storage space of the source device is insufficient. Therefore, due to the insufficient storage space, data of another device in the network cannot be migrated to the source device with the insufficient storage space.
(5) A device that is connected to a power supply or powered on is preferentially selected as the target device, so that a source device can migrate an infrequently-used file to the target device when storage space needs to be released.

In a possible design, before the sending a first file to a second electronic device, the method further includes:
compressing the first file.

The sending a first file to a second electronic device includes: sending a compressed first file to the second electronic device.

Optionally, the first electronic device may compress the first file by using any possible compression algorithm.

In a possible design, after the sending a first file to a second electronic device, the method further includes:
updating the metadata of the first file, where the metadata is used to identify that an original file of the first file is not on the first device, and the metadata is further used to identify that the original file has been migrated to the at least one second electronic device.

In this application, the metadata of the migrated file is managed, so that when the metadata of the file is separated from the original file, data consistency can be ensured, and each device in the network can learn a current storage location of the original file, so as to perform file management based on the storage location of the original file.

In a possible design, after the sending a first file to a second electronic device, the method further includes:
detecting a migrate-back operation performed by the user on the first file, and migrating the first file from the second electronic device back to the first device based on the metadata corresponding to the first file.

In this way, the first electronic device may migrate the first file back to the first electronic device based on a use requirement of the user, to meet a use requirement of the user for using the first file on the first electronic device.

In a possible design, the first file is a first picture, and the method further includes:
in response to the operation performed by the user on the identifier of the folder of the second electronic device, displaying a thumbnail of the first picture migrated from the first electronic device to the second electronic device.

In this way, the first electronic device can provide local browsing experience of the first file for the user by using the metadata and the thumbnail of the first file.

In a possible design, there are one or more second electronic devices.

In a possible design, devices in a same electronic device group include devices in a same local area network, and/or devices in a same electronic device group include devices between which a trust relationship has been established.

Generally, there is an association relationship between devices in the network (an electronic device group). For example, when the devices in the network belong to a same local area network, an infrequently-used file can be transmitted between the devices more quickly, and a delay is reduced. This helps accelerate release of storage space of the electronic device. **In** addition, dependency on an external network is reduced, and storage space of the electronic device can still be released when the external network is disconnected or the like. For another example, when a trust relationship has been established between devices in the network, a device migrates local infrequently-used data (cold data) to another device in the network, to ensure security of the cold data as much as possible and reduce a security risk caused by cold data leakage. It can be learned that, in comparison with migrating local data of a device to a cloud server, in this embodiment of this application, the local cold data of the device is migrated or backed up to the another device in the same network, so that a data migration or backup effect with a higher speed, high reliability, or high security can be obtained.

In a possible design, the method further includes:
displaying a setting interface, where the setting interface is used to enable a distributed data management function.

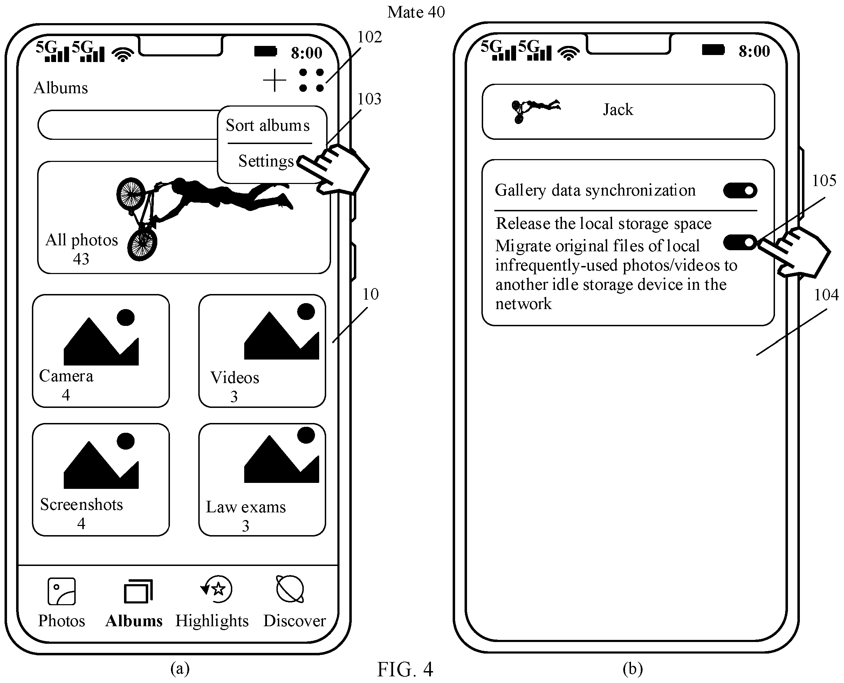

For example, as shown in (a) in FIG. 4, the mobile phone displays an album interface 10 of a gallery application, and the album interface 10 includes a control 102. After an operation of tapping the control 102 by the user is detected, the mobile phone may display a card 103, and the card 103 may include a setting option. When detecting that the user taps the setting option, the mobile phone may display a setting interface 104 shown in (b) in FIG. 4. The setting interface 104 may include a switch 105, and the switch is used to enable the distributed data management function in embodiments of this application.

According to a second aspect, a distributed data management method is provided, applied to a second electronic device, where the method includes:
receiving a first file from a first electronic device;
storing the first file, where the first electronic device and the second electronic device are located in a same electronic device group;
displaying a fifth interface, where the fifth interface includes an identifier of a folder corresponding to the first electronic device; and
displaying, in response to an operation performed by a user on the identifier of the folder of the first electronic device, information about the first file migrated from the first electronic device to the second electronic device.

In a possible design, after the receiving a first file from a first electronic device, the method further includes:
receiving an edit operation performed by the user on the first file; and
sending a notification message to the first electronic device, so that the first electronic device updates metadata of the first file.

In a possible design, the first file includes a first picture, and the method further includes:
sending a thumbnail of the edited first picture to the first electronic device.

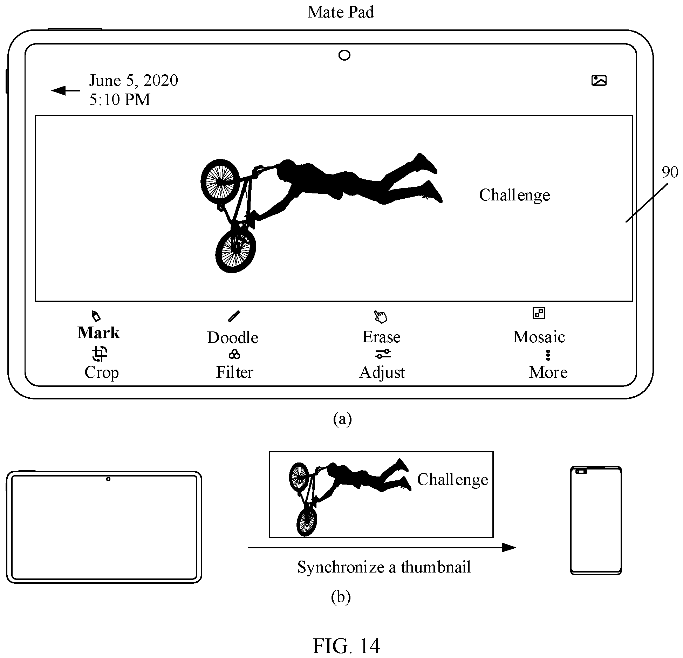

For example, as shown in (a) in FIG. 14, a tablet (an example of the second electronic device) displays an editing interface 90. The user may edit an infrequently-used photo (an example of the first file) displayed on the editing interface 90, and attach an annotation "challenge" to the infrequently-used photo. Then, the tablet may generate, based on an original image corresponding to the edited infrequently-used photo, a thumbnail (for example, a thumb thumbnail or an LCD thumbnail) corresponding to the infrequently-used photo, and synchronize the thumbnail corresponding to the infrequently-used photo to a source device (a mobile phone 1), as shown in (b) in FIG. 14. After receiving the thumbnail corresponding to the infrequently-used photo, the mobile phone 1 may update metadata of the infrequently-used photo, and use the new thumbnail to replace a locally stored old thumbnail of the infrequently-used photo. In this way, subsequently, the mobile phone 1 may use the new thumbnail to provide a local browsing service of the infrequently-used photo for the user.

In a possible design, after the receiving a first file from a first electronic device, the method further includes:
detecting a migrate-back operation performed by the user on the first file, and migrating an original file of the first file back to the first electronic device.

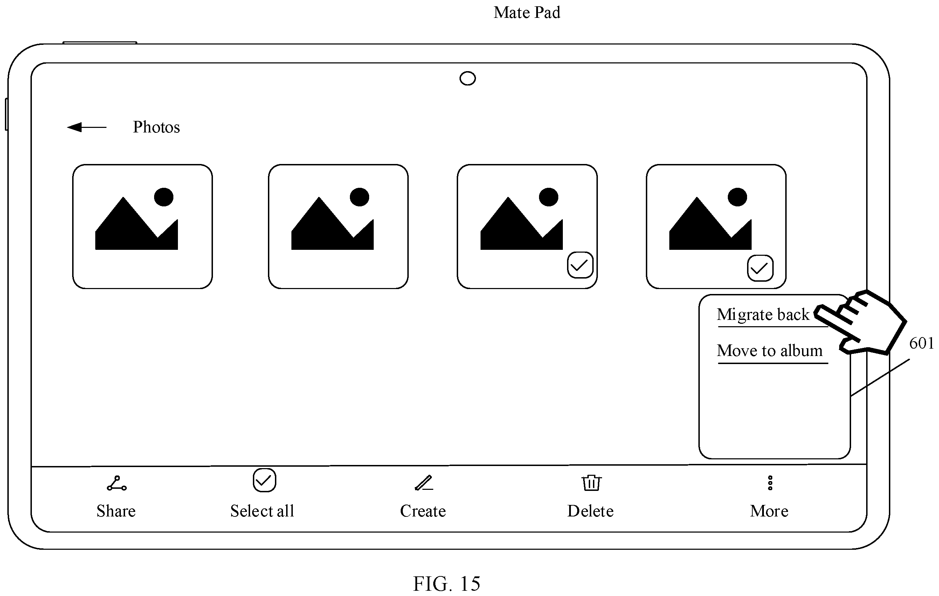

In some embodiments, the user may alternatively migrate an infrequently-used file back to a source device through a target device. For example, as shown in FIG. 15, the user may select an infrequently-used photo that needs to be migrated back, and tap a more option. In response to the operation of tapping the more option by the user, a tablet may display a card 601. When detecting that the user taps a migrate-back option on the card 601 (a migrate-back operation), the tablet may migrate, from the tablet to a mobile phone 1 (a Mate 40), the infrequently-used photo that is selected by the user.

In a possible design, the electronic device group further includes a third electronic device, and the method further includes:
receiving a third file from the third electronic device; and
storing the third file.

According to a third aspect, a distributed data management system is provided, including:
a first electronic device, configured to: display a first interface, where the first interface includes identifiers of one or more to-be-migrated devices; and send a first file to a second electronic device in response to an operation of determining an identifier of the second electronic device from the identifiers of the one or more to-be-migrated devices by a user, where the first electronic device and the one or more to-be-migrated devices are located in a same electronic device group; and the second electronic device, configured to receive the first file from the first electronic device and store the first file.

The first electronic device is further configured to: retain metadata corresponding to the first file, where the metadata is used to identify that the first file has been migrated to the second electronic device; display a second interface based on the metadata of the first file, where the second interface includes an identifier of a folder corresponding to the second electronic device; and display, in response to an operation performed by the user on the identifier of the folder of the second electronic device, information about the file migrated from the first electronic device to the second electronic device.

In a possible design, that the first electronic device is configured to send a first file to at least one second electronic device includes: sending the first file to the second electronic device when storage space of the first electronic device is insufficient.

In a possible design, the first file is an infrequently-used file.

In a possible design, the second electronic device is configured to: display a third interface, where the third interface includes identifiers of one or more to-be-migrated devices; and send a second file to the first electronic device in response to an operation of determining an identifier of the first electronic device from the identifiers of the one or more to-be-migrated devices by the user.

The first electronic device is configured to: receive the second file from the second electronic device, and store the second file.

The second electronic device is further configured to: retain metadata corresponding to the second file, where the metadata is used to identify that the second file has been migrated to the first electronic device; display a fourth interface based on the metadata of the second file, where the fourth interface includes an identifier of a folder corresponding to the first electronic device; and display, in response to an operation performed by the user on the identifier of the folder of the first electronic device, information about the file migrated from the second electronic device to the first electronic device.

For example, the first electronic device is a mobile phone, and the second electronic device is a tablet. When storage space of the mobile phone is insufficient, the mobile phone may migrate local data (for example, cold data) to the tablet in the same electronic device group. **In** some other scenarios, for example, when the storage space of the mobile phone is sufficient, the mobile phone may alternatively receive cold data migrated from the tablet. In this way, storage space utilization of devices in the same electronic device group can be improved, and idle storage space can be avoided. In addition, storage pressure of some devices in the electronic device group can be effectively relieved.

According to a fourth aspect, a distributed data management apparatus is provided, used in a first electronic device or a corresponding component (for example, a chip system), where the apparatus includes:
a display module, configured to display a first interface, where the first interface includes information about one or more second electronic devices;
a communication module, configured to send a first file to at least one second electronic device in response to determining the at least one second electronic device from the one or more second electronic devices by a user, so that the first electronic device receives and stores the first file, where the first electronic device and the at least one second electronic device are located in a same electronic device group; and
a storage module, configured to retain metadata corresponding to the first file, where the metadata includes metadata used to identify that the first file has been migrated from the first electronic device to the at least one second electronic device.

The display module is further configured to display a second interface, where the second interface includes a folder corresponding to the at least one second electronic device.

The display module is further configured to: display, in response to an operation performed by the user on a folder of a target electronic device in the at least one second electronic device, information about a file migrated from the first electronic device to the target electronic device. In a possible design, the apparatus further includes a processing module, configured to determine, based on an access habit of the user for a local file, the first file that is infrequently used by the user.

In a possible design, the sending a first file to at least one second electronic device includes: sending the first file to the at least one second electronic device when storage space is insufficient. In a possible design, the communication module is further configured to receive a second file from the second electronic device when there is remaining storage space.

The storage module is further configured to store the second file.

In a possible design, the processing module is further configured to:
obtain device information of a plurality of electronic devices in the electronic device group, and determine one or more second electronic devices from the plurality of electronic devices based on the device information of the plurality of electronic devices.

The device information includes any one or more pieces of the following information: a device type, a device name, remaining storage space, and a device role.

In a possible design, the processing module is further configured to compress the first file before sending the first file to the at least one second electronic device.

The sending a first file to at least one second electronic device includes: sending a compressed first file to the at least one second electronic device.

In a possible design, the processing module is further configured to: after the communication module sends the first file to the at least one second electronic device, update the metadata of the first file, where the metadata is used to identify that an original file of the first file is not on the first device, and the metadata is further used to identify that the original file has been migrated to the at least one second electronic device.

In a possible design, the processing module is further configured to: after an input module detects a migrate-back intention of the user for the first file, migrate the first file from the at least one second electronic device back to the first device based on the metadata corresponding to the first file.

In a possible design, the first file includes a first picture, and the storage module is further configured to locally store a thumbnail of the first picture.

In a possible design, the displaying, in response to an operation performed by the user on a folder of a target electronic device in the at least one second electronic device, information about a file migrated from the first electronic device to the target electronic device includes:
displaying, in response to an operation performed by the user on the folder of the target electronic device in the at least one second electronic device, a thumbnail of the first picture migrated from the first electronic device to the target electronic device.

In a possible design, the at least one second electronic device includes at least two second electronic devices.

In a possible design, devices in a same electronic device group include devices in a same local area network, and/or devices in a same electronic device group include devices between which a trust relationship has been established.

In a possible design, the display module is further configured to display a setting interface, where the setting interface is used to enable a distributed data management function.

According to a fifth aspect, a distributed data management method is provided, applied to a second electronic device or a corresponding component, where the apparatus includes:
a communication module, configured to receive a first file from a first electronic device;
a storage module, configured to store the first file, where the first electronic device and the second electronic device are located in a same electronic device group; and
a display module, configured to: display a third interface, where the third interface includes a folder corresponding to the first electronic device; and display, in response to an operation performed by a user on the folder of the first electronic device, information about the first file migrated from the first electronic device to the second electronic device.

In a possible design, the apparatus further includes an input module, configured to: after the communication module receives the first file from the first electronic device, receive an edit operation performed by the user on the first file.

The communication module is further configured to send a notification message to the first electronic device, so that the first electronic device updates metadata of the first file.

In a possible design, the first file includes a first picture, and the communication module is further configured to send a thumbnail of the edited first picture to the first electronic device.

In a possible design, the processing module is further configured to: after the input module detects a migrate-back intention of the user for the first file, migrate an original file of the first file back to the first electronic device.

In a possible design, the electronic device group further includes a third electronic device, and the communication module is further configured to receive a third file from the third electronic device. The storage module is further configured to store the third file.

According to a sixth aspect, an electronic device is provided, where the electronic device includes a processor and a memory, the memory is configured to store computer program code, the computer program code includes computer instructions, and when executing the computer instructions, the processor performs the method in any possible design of any one of the foregoing aspects in this application.

According to a seventh aspect, a distributed data management system is provided, including the electronic devices according to the fourth aspect and the fifth aspect.

According to an eighth aspect, an embodiment of this application provides a chip system, where the chip system is used in an electronic device including a touchscreen. The chip system includes one or more interface circuits and one or more processors. The interface circuit and the processor are interconnected through a line. The interface circuit is configured to receive a signal from a memory of the electronic device, and send the signal to the processor. The signal includes computer instructions stored in the memory. When the processor executes the computer instructions, the electronic device performs the method in any one of the foregoing aspects and any possible implementation of the foregoing aspects.

According to a ninth aspect, an embodiment of this application provides a computer-readable storage medium, where the computer-readable storage medium includes computer instructions, and when the computer instructions are run on an electronic device, the electronic device is enabled to perform the method in any possible implementation of any aspect.

According to a tenth aspect, an embodiment of this application provides a computer program product, where when the computer program product runs on a computer, the computer is enabled to perform the method in any one of the foregoing aspects and any possible implementation of the foregoing aspects.

### BRIEF DESCRIPTION OF DRAWINGS

FIG. 1A(a) to FIG. 1A(c) show interfaces in a picture editing process in a related technology;
FIG. 1B is a diagram of an architecture of a distributed system according to an embodiment of this application;
FIG. 1C and FIG. 1D are interface diagrams in a distributed networking process according to an embodiment of this application;
FIG. 2A and FIG. 2B are diagrams of a structure of an apparatus according to an embodiment of this application;
FIG. 3A-1 to FIG. 3A-3 are a diagram of a software architecture of an apparatus according to an embodiment of this application;

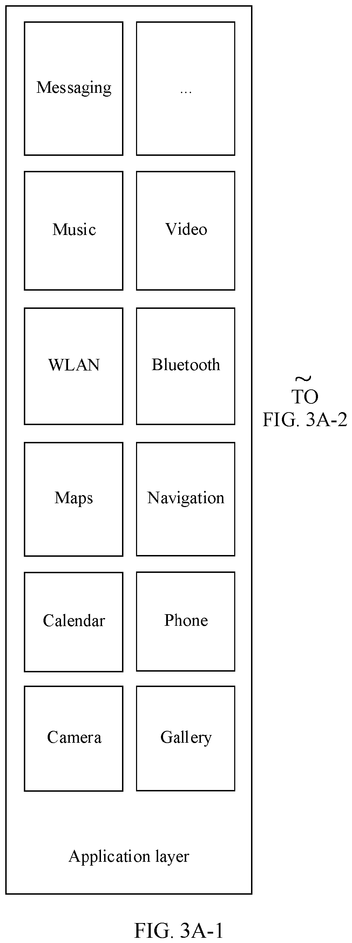

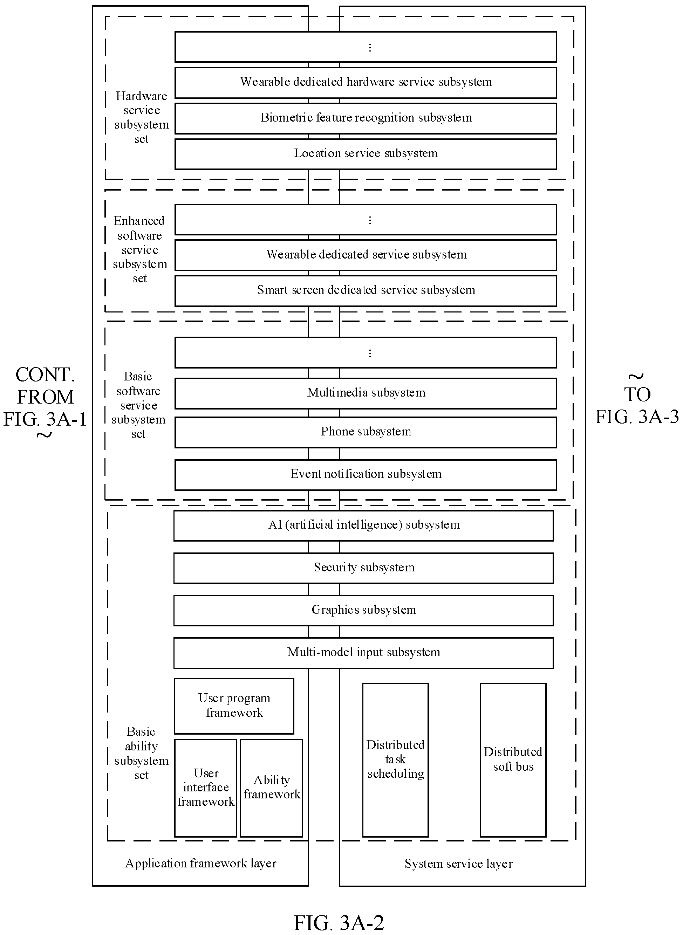

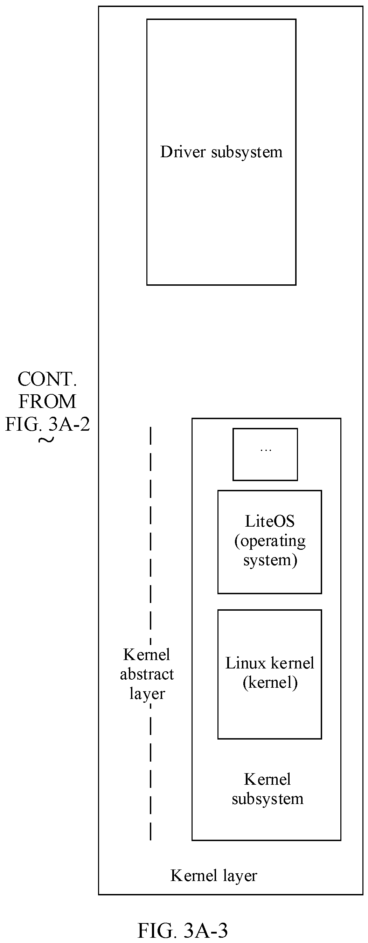

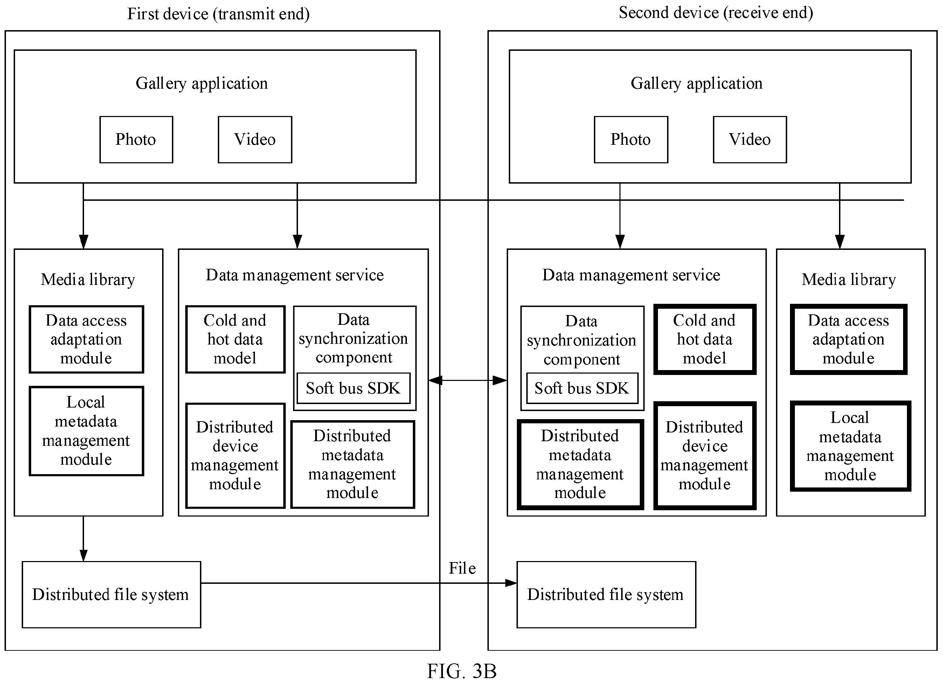

FIG. 3B is another diagram of a structure of an apparatus according to an embodiment of this application;
FIG. 4 is a group of interface diagrams according to an embodiment of this application;
FIG. 5 is another group of interface diagrams according to an embodiment of this application;

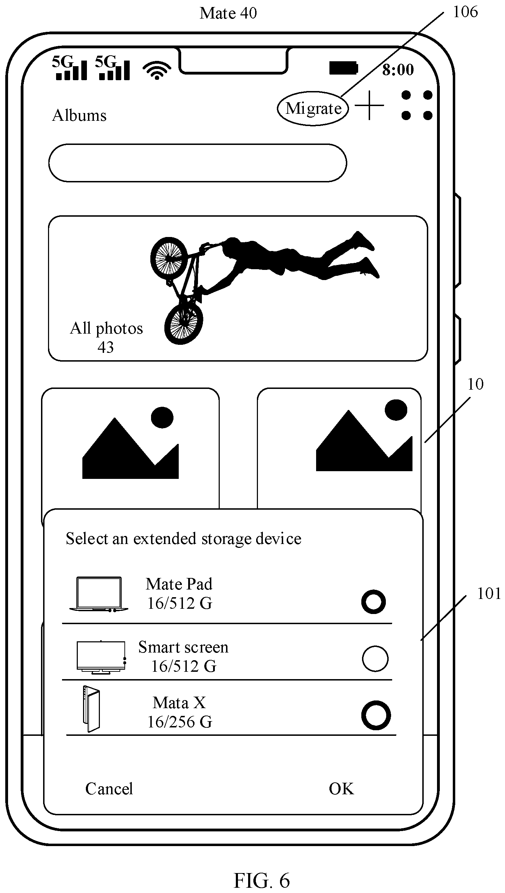

FIG. 6 is another group of interface diagrams according to an embodiment of this application;

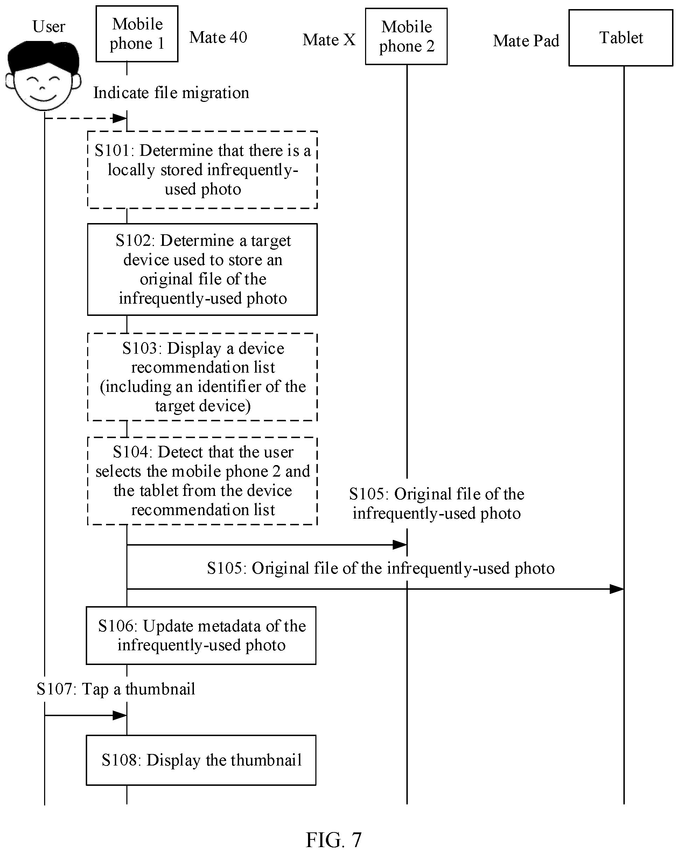

FIG. 7 is a schematic flowchart of a distributed data management method according to an embodiment of this application;

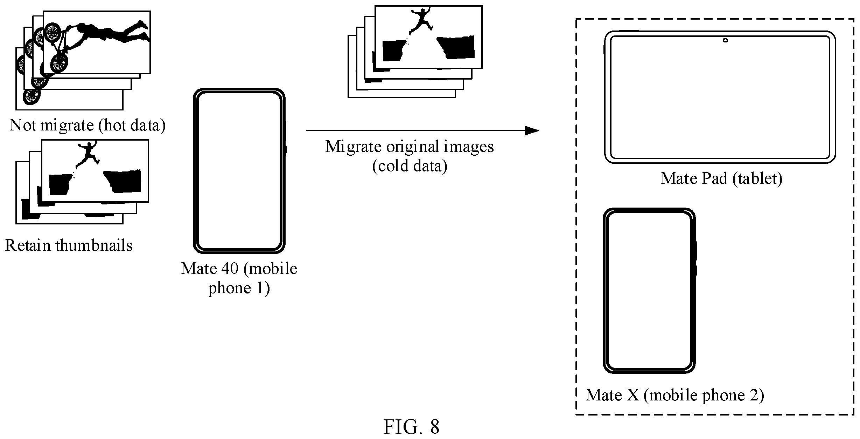

FIG. 8 is a diagram of a scenario according to an embodiment of this application;

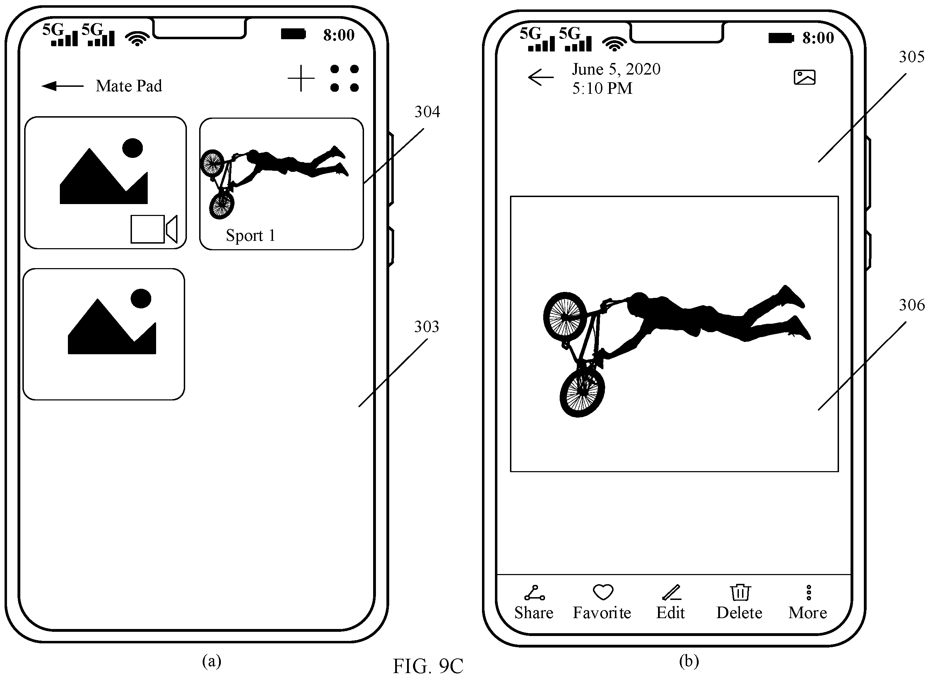

FIG. 9A, FIG. 9B, and FIG. 9C are another group of interface diagrams according to an embodiment of this application;

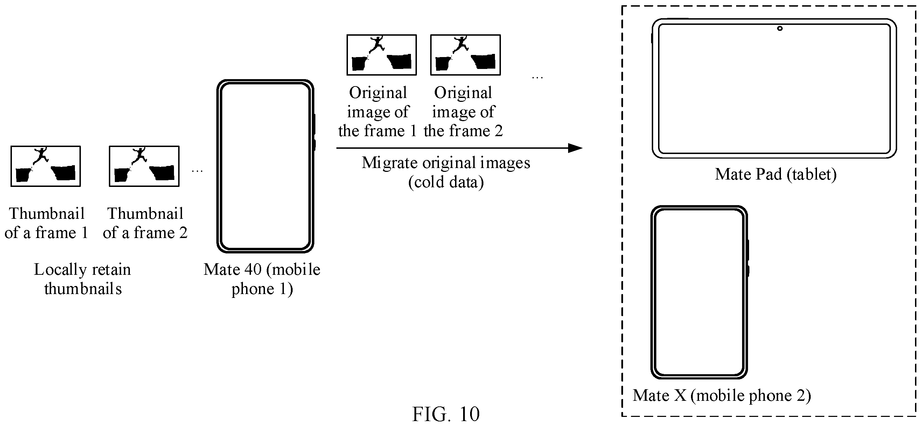

FIG. 10 is a diagram of a scenario according to an embodiment of this application;

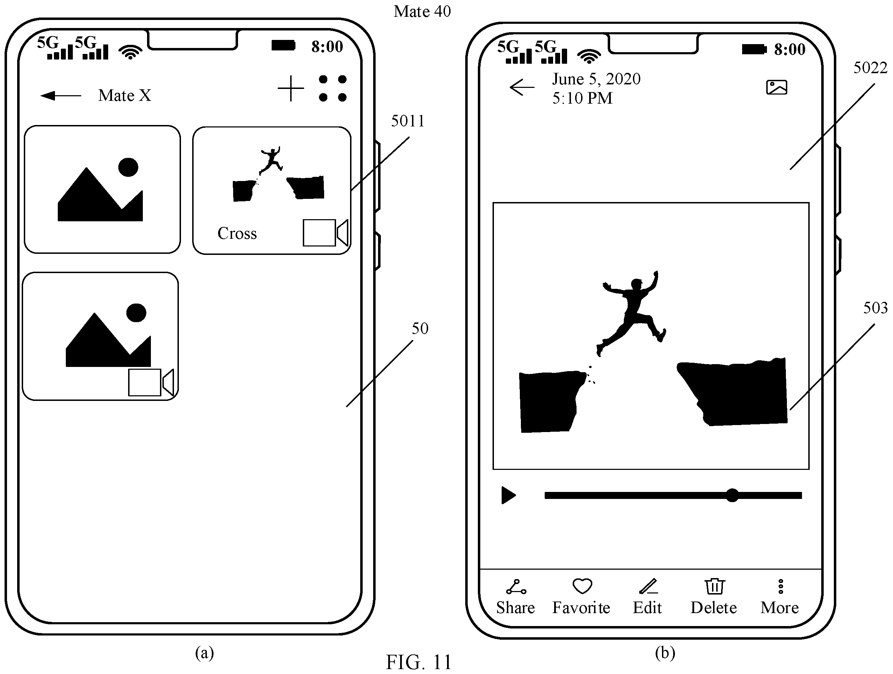

FIG. 11 to FIG. 17 are interface diagrams according to an embodiment of this application;

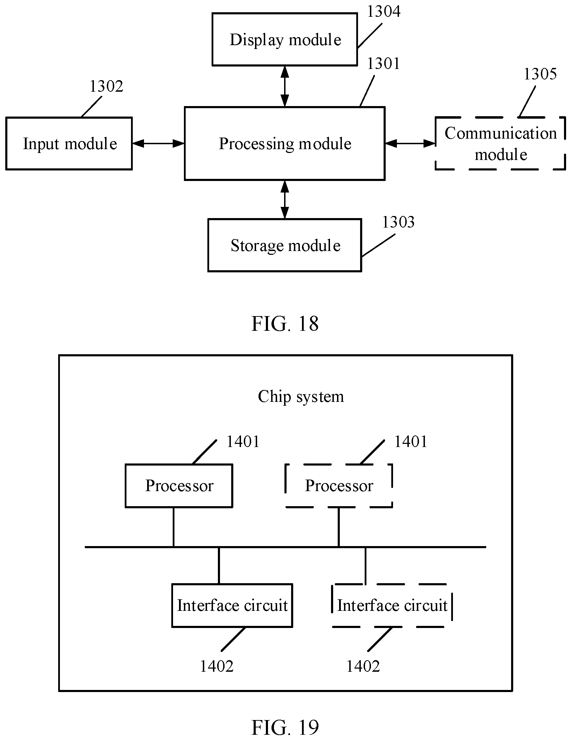

FIG. 18 is a diagram of a structure of an electronic device according to this application; and
FIG. 19 is a diagram of a chip system according to this application.

### DESCRIPTION OF EMBODIMENTS

In the specification and the accompanying drawings of this application, terms such as "first" and "second" are intended to distinguish between different objects or distinguish between different processing on a same object. Words such as "first" and "second" may distinguish between same items or similar items that provide basically same functions and purposes. For example, a first device and a second device are merely intended to distinguish between different devices, and do not limit a sequence thereof. A person skilled in the art may understand that the words such as "first" and "second" do not limit a quantity or an execution sequence, and the words such as "first" and "second" do not indicate a definite difference.

"At least one" means one or more, and "a plurality of" means two or more.

"And/or" describes an association relationship between associated objects, and indicates that three relationships may exist. For example, A and/or B may indicate the following three cases: A exists alone, both A and B exist, and B exists alone, where A and B may be singular or plural. The character "/" generally represents an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, the terms "including", "having", or any other variant thereof mentioned in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that in embodiments of this application, words such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the words such as "example" or "for example" is intended to present a related concept in a specific manner.

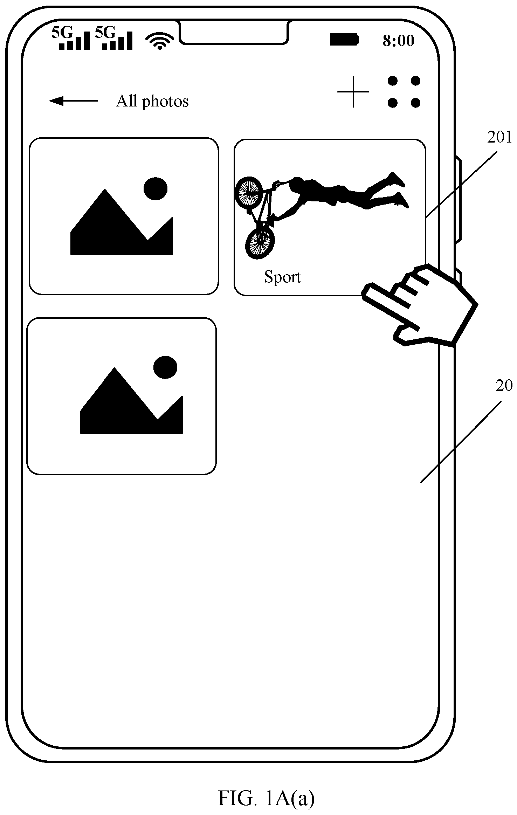

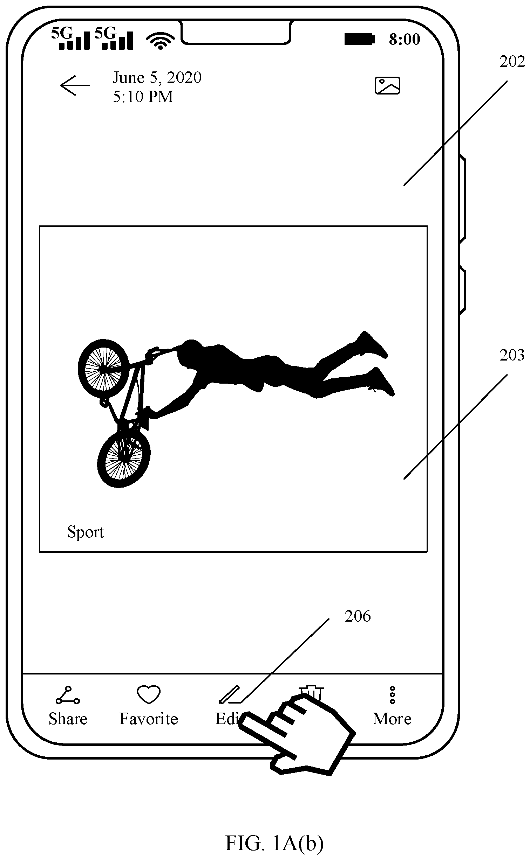

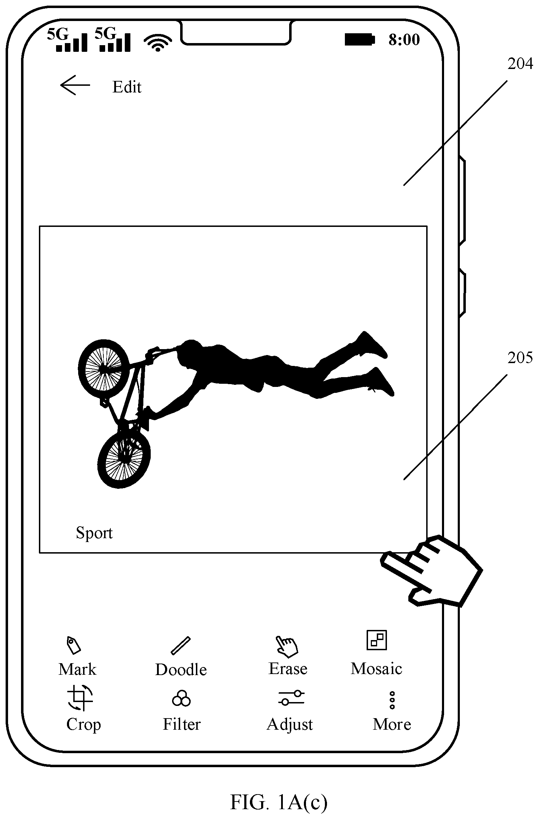

Currently, an electronic device may store files such as a photo or a video. The photo is used as an example. When locally storing an original image of the photo, the electronic device may further locally store a thumbnail of the photo. The thumbnail is a file generated by compressing the original image, and this does not affect normal browsing of a user. The thumbnail includes but is not limited to a thumb thumbnail and a high-quality thumbnail (which may also be referred to as an LCD thumbnail). The thumb thumbnail may be a thumbnail whose UI size is close to a thumbnail size. The LCD thumbnail may be a thumbnail whose UI size is greater than that of the thumb thumbnail. For example, an original image of a photo occupies 5 MB storage space, a thumb thumbnail occupies 20 KB storage space, and an LCD thumbnail occupies 100 KB storage space. In some scenarios, the user may perform operations such as browsing and editing on the photo on the electronic device. For example, as shown in FIG. 1A(a), a mobile phone displays an interface 20. The interface 20 may include thumb thumbnails of one or more photos, for example, a thumb thumbnail 201 of a photo "sport". After detecting that the user taps the thumb thumbnail 201 of the photo "sport", the mobile phone may jump to a browsing interface 202 shown in FIG. 1A(b), and the browsing interface 202 may present an LCD thumbnail 203 of the photo "sport". The user can browse the photo "sport" through the LCD thumbnail.

As shown in FIG. 1A(b), when detecting that the user taps an editing option 206, the mobile phone may display an editing interface 204 shown in FIG. 1A(c). The editing interface 204 may present an original image 205 of the photo "sport". The user may edit the photo "sport" on the original image 205. It can be learned that, in the process in which the user browses the photo, the mobile phone does not need to present the original image of the photo, and the original image is usually applied to an editing (for example, deleting, filtering, or comment adding) scenario or the like. Currently, the electronic device stores a large quantity of original images and thumbnails of photos and videos, which occupy a large amount of storage space. As a result, available storage space of the electronic device is reduced.

To release storage space of the electronic device and reduce storage pressure, embodiments of this application provide a distributed data management method. When the storage space is insufficient, the electronic device may migrate some local files to another available storage device in a network. In this way, not only storage pressure of the electronic device can be reduced, but also storage space of the available storage device in the network can be fully used, to avoid a waste of the storage space of the available storage device.

A plurality of electronic devices in a same network may form an electronic device group. The plurality of electronic devices may be a plurality of electronic devices that have an association relationship. For example, the plurality of electronic devices may be a plurality of electronic devices that log in to a same account. For another example, the plurality of electronic devices may be a plurality of electronic devices located in a same local area network. A specific association relationship between the electronic devices in the electronic device group is not limited in embodiments of this application.

An available storage device is a device that can be used to store a file from another electronic device in a network. Optionally, the available storage device may meet any one or more of the following conditions: Remaining storage space of the available storage device is greater than or equal to storage space required by a to-be-migrated file, the available storage device is a personal device, or the available storage device is a device that is connected to a power supply or powered on.

The distributed data management method provided in embodiments of this application is applied to a distributed system (distributed system) including a plurality of electronic devices. The distributed system may be an entirety formed by the plurality of electronic devices. In the distributed system, at least two electronic devices are connected in a wireless connection or wired connection manner, and jointly execute a task. A device in the distributed system may be referred to as a distributed device. The distributed system is in a distributed environment. The distributed environment may be a local area network or a wide area network. This is not limited in embodiments of this application. According to the technical solutions in embodiments of this application, data of the plurality of distributed devices in the distributed system can be managed in a unified manner. The data of the distributed device includes but is not limited to data of an application.

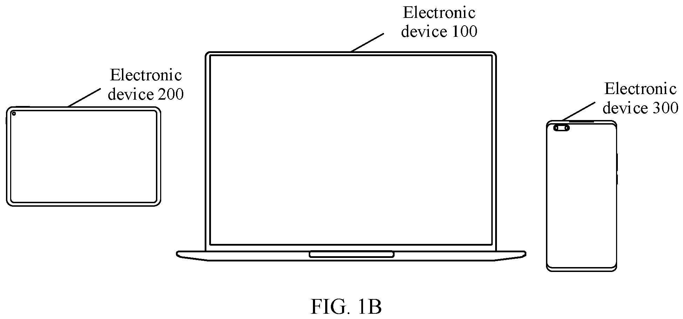

FIG. 1B is an example diagram of a distributed system according to an embodiment of this application. As shown in FIG. 1B, the system includes a plurality of electronic devices (in FIG. 1B, electronic devices 100 to 300 are used as an example). An application may be installed on each of the plurality of electronic devices.

The plurality of electronic devices may establish a communication connection. Optionally, the connection may be established between the devices according to various communication protocols. The communication protocol includes but is not limited to one or more of the following: a wireless fidelity (wireless fidelity, Wi-Fi) protocol and a Bluetooth protocol for establishing a connection. After the communication connection is established, data transmission may be performed between the devices. For example, when storage space of a device is insufficient, the device may send a part of stored data to another device in the distributed system, to release storage space of the device and relieve storage pressure. Optionally, the device may send cold data (for example, infrequently-used data) in local data to another device in the distributed system. Optionally, hot data (for example, frequently-used data) stored on the device may continue to be locally stored on the device.

In this way, based on a type of data stored on the device being cold data or hot data, the data in the device may be stored in a distributed manner. To be specific, the hot data in the device continues to be locally stored, and the cold data in the device may be migrated to another device in a network. Optionally, the plurality of electronic devices that establish the connection may be a plurality of electronic devices that have an association relationship. The plurality of electronic devices may form an electronic device group. Devices in a same electronic device group may be referred to as being located in a same network. Optionally, the plurality of electronic devices may be a plurality of electronic devices that log in to a same account. For example, a connection may be established between electronic devices that log in to a same Huawei account, to form an electronic device group. Optionally, the plurality of electronic devices that establish the connection are located in a same local area network. In some other embodiments, the plurality of electronic devices that form the electronic device group may not be located in a same local area network.

Alternatively, the plurality of electronic devices that form the electronic device group may not log in to a same account. For example, the plurality of electronic devices that form the electronic device group may be electronic devices of family members or electronic devices of work partners. A specific association relationship between the electronic devices in the electronic device group is not limited in embodiments of this application.

Optionally, in an electronic device group formed by electronic devices of different member types, data that may be shared between the electronic devices in the group is different. For example, for an electronic device group formed by electronic devices of family members, data in aspects such as life and work may be shared between the plurality of electronic devices. For example, data such as an album and a note may be shared between the plurality of electronic devices. For an electronic device group formed by electronic devices of working partners, work-related data may be shared between the plurality of electronic devices. For example, data such as a conference arrangement may be shared. Data in different electronic device groups may be isolated, to improve data security in the distributed system.

In some embodiments, the electronic device may provide a setting entrance, and a user may set a data sharing policy of the electronic device group through the setting entrance.

In embodiments of this application, devices in a same electronic device group may form a super device. Software and hardware resources can be shared between the devices, to improve interaction experience of the user in using the super device.

Based on the diagram of the system architecture shown in FIG. 1B, in a possible implementation, when the electronic device 100, the electronic device 200, and the electronic device 300 communicate with each other, a trust relationship needs to be verified or established between the electronic devices, to provide support for subsequent data synchronization.

In some embodiments, the electronic device 100 may find, through a mobile network or the Internet, that a login account of one or more other devices is an account of the electronic device 100, or the login account of the one or more other devices is an associated account of the login account of the electronic device 100. In this case, the one or more other devices have a trust relationship with the electronic device 100. The one or more other devices include the electronic device 200 and the electronic device 300. Devices that log in to a same account or associated accounts can obtain device information of each other to implement data communication. The associated account may be an account authorized by the same account.

The account may be an account provided by a cloud server provider for the user, for example, a Huawei account, or may be an account used to log in to an application, for example, accounts of various types of communication software or an account of payment software.

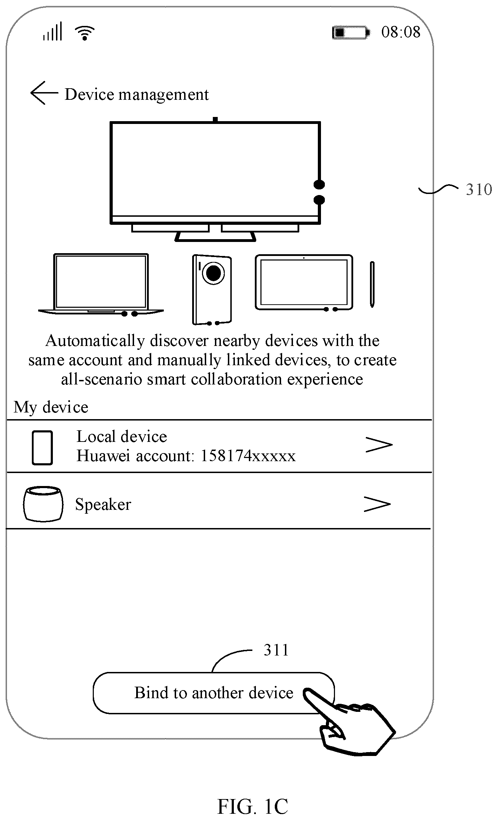

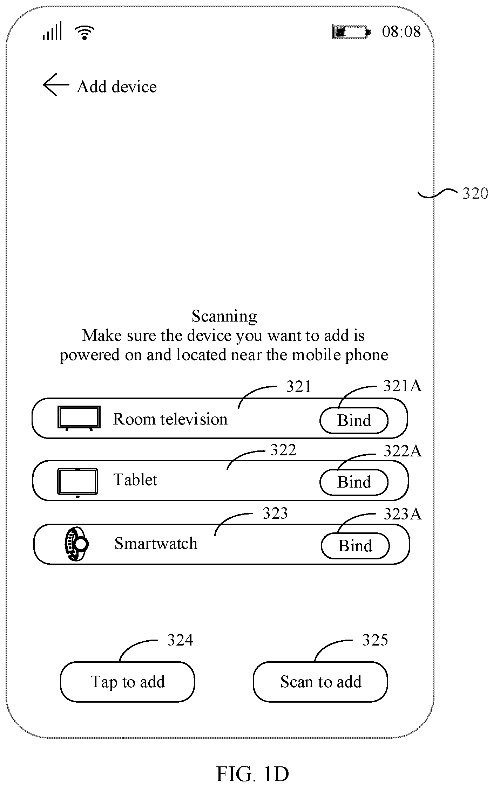

In some embodiments, a trust relationship may be established between electronic devices in a manual addition manner, including, for example, a touch manner and a scan manner. For example, as shown in FIG. 1C, the user may enter a device management interface 310 from a setting application, and the device management interface 310 may include a list named "My device". "My device" includes a local device and a speaker. The local device and the speaker may be devices that have a same account (for example, sharing a Huawei account). Alternatively, the local device and the speaker may be devices that have different accounts but are authenticated and bound. Optionally, the device management interface 310 may include a button 311 for binding another device. In embodiments of this application, binding means that a trust relationship is established between two devices, so that operations such as data synchronization between the devices can be performed. In response to an operation (for example, a tap operation) performed by the user on the button 311 for binding another device, a device binding interface 320 shown in FIG. 1D is entered. The device binding interface 320 includes a list of scanned devices that can be added, and the user may select a to-be-bound device from the list of devices that can be added, for example, a room television 321, a tablet 322, and a smartwatch 323 shown in FIG. 1D. When the electronic device wants to establish a binding relationship with the room television 321, the tablet 322, or the smartwatch 323, a binding button 321A corresponding to the room television 321, a binding button 322A corresponding to the tablet 322, or a binding button 323A corresponding to the smartwatch 323 may be directly tapped, to implement binding to the room television 321, the tablet 322, or the smartwatch 323.

Optionally, the device binding interface 320 further includes a touch to add button 324 and a scan to add button 325, which may be used to bind to an electronic device that is not found by the electronic device through scanning. For example, in response to a user operation on the touch to add button 324, the electronic device enables NFC, and touches a label on another device by using a back side, to implement binding to the another device; or in response to a user operation on the scan to add button 325, the electronic device scans a two-dimensional code of another device, to implement binding to the another device.

It should be noted that mutual communication between devices that is for implementing the solutions in embodiments of this application may be based on a same network, or may be based on a trust relationship between the devices, for example, a common account, an associated account, or a binding relationship, or may be based on a same network and an established trust relationship. This is not limited in this application.

Optionally, the electronic device may be a device like a mobile phone, a tablet computer, a desktop computer, a laptop computer, a handheld computer, a notebook computer, a netbook, a personal digital assistant (personal digital assistant, PDA), or a television. A specific form of the electronic device is not specially limited in embodiments of this application. FIG. 1B shows an example of a form of the electronic device by using an example in which the electronic device 100 is a television, the electronic device 200 is a tablet, and the electronic device 300 is a mobile phone, but this does not constitute a limitation on the form of the electronic device.

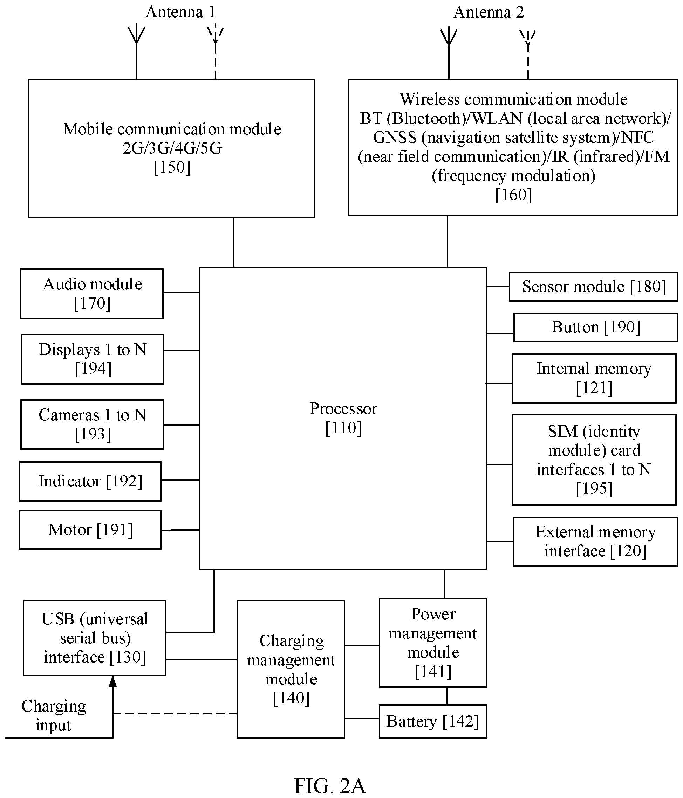

For example, FIG. 2A is a diagram of a structure of an electronic device according to an embodiment of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device. In some other embodiments of this application, the electronic device may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction fetching and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the electronic device.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSI interface, to implement a display function of the electronic device.

The USB interface 130 is an interface that conforms to a USB standard specification, and may be specifically a mini USB interface, a micro USB interface, a USB Type C interface, or the like. The USB interface 130 may be configured to connect to the charger to charge the electronic device, or may be used for data transmission between the electronic device and a peripheral device, or may be configured to connect to a headset for playing an audio through the headset. The interface may be further configured to connect to another electronic device, for example, an AR device.

It may be understood that the interface connection relationship between the modules shown in this embodiment of this application is merely an example, and does not constitute a limitation on the structure of the electronic device. In some other embodiments of this application, the electronic device may alternatively use an interface connection manner different from that in the foregoing embodiment, or use a combination of a plurality of interface connection manners.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a solution that is for wireless communication including 2G/3G/4G/5G and the like and that is used in the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor, and is then transferred to the application processor. The application processor outputs a sound signal through an audio device, or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide wireless communication solutions applied to the electronic device, including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function through the GPU, the display 194, the application processor, and the like. The GPU is a microprocessor for image processing, and connects the display 194 to the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be manufactured by using a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum dot light-emitting diodes (quantum dot light-emitting diodes, QLED), or the like. In some embodiments, the electronic device may include one or N displays 194, where N is a positive integer greater than 1.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like an RGB format or a YUV format. In some embodiments, the electronic device may include one or N cameras 193, where N is a positive integer greater than 1.

The external memory interface 120 may be configured to connect to an external storage card, for example, a micro SD card, to extend a storage ability of the electronic device. The external storage card communicates with the processor 110 through the external memory interface 120, to implement a data storage function. For example, files such as music and videos are stored in the external storage card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) created when the electronic device is used, and the like. In addition, the internal memory 121 may include a high-speed random access memory, and may further include a non-volatile memory, for example, at least one magnetic disk storage device, a flash storage device, or a universal flash storage (universal flash storage, UFS). The processor 110 runs the instructions stored in the internal memory 121 and/or the instructions stored in the memory disposed in the processor, to execute various function applications of the electronic device and data processing. The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The electronic device may perform music playing, recording, or the like through the audio module 170. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button or a touch button. The electronic device may receive a button input, and generate a button signal input related to a user setting and function control of the electronic device. The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, to implement contact with or separation from the electronic device. The electronic device may support one or N SIM card interfaces, where N is a positive integer greater than 1.

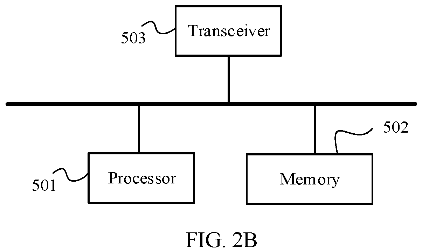

For example, FIG. 2B shows another example structure of the electronic device. As shown in FIG. 2B, the electronic device includes a processor 501, a memory 502, and a transceiver 503. For implementations of the processor 501 and the memory 502, refer to implementations of the processor and the memory of the electronic device shown in FIG. 2A. The transceiver 503 is configured for interaction between the electronic device and another device. The transceiver 503 may be a device based on Wi-Fi, Bluetooth, or another communication protocol.

FIG. 2A and FIG. 2B are merely possible examples of the structure of the electronic device, and do not constitute a limitation on the structure of the electronic device.

For example, FIG. 3A-1 to FIG. 3A-3 show an example software architecture of the electronic device. A system may include four layers: an application program layer (application layer for short), an application framework layer (framework layer for short), a system service layer, and a kernel layer (also referred to as a driver layer) from top to bottom.

The application layer may include a series of application packages. In some embodiments of this application, an application may be atomized. Specifically, the application may include one or more abilities (abilities, which may also be referred to as atomic abilities or the like). The ability includes but is not limited to a feature ability (feature ability, FA, which may also be referred to as a meta program) and an atomic ability (atomic ability, AA, which may also be referred to as a meta service). The FA has a UI interface and provides a user interaction ability. The AA has no UI interface and provides a background task running ability and unified data access abstraction. The FA and the AA may have other names. This is not limited in embodiments of this application.

The application framework layer may provide an API and a programming framework for an application at the application layer, for example, provide a user interface (UI) framework, an ability (ability) framework, and a user program framework.

The system service layer is a set of core capabilities of the system and provides a service for applications through the framework layer. This layer includes the following parts.

A system basic ability subsystem set provides basic abilities for running, scheduling, migration, and the like of a distributed application on a plurality of devices, and includes subsystems such as a distributed soft bus, a distributed data management module, distributed task scheduling, Ark multi-language runtime (not shown in the figure), a common basic library (not shown in the figure), a multi-mode input, graphics, security, and artificial intelligence (artificial intelligence, AI).

The distributed soft bus is a logical channel that can be used for communication between devices. A basic software service subsystem set provides common and general software services for the system, and includes subsystems such as an event notification, a phone, multimedia, DFX, and MSDP&DV.

An enhanced software service subsystem set provides, for the system, differentiated ability-enhanced software services dedicated to different devices, and includes subsystems such as a smart screen dedicated service, a wearable dedicated service, and an IoT dedicated service.

A hardware service subsystem set provides a hardware service, and includes subsystems such as a location service, biometric feature identification, a wearable dedicated hardware service, and an IoT dedicated hardware service.

Based on deployment environments of different device forms, the basic software service subsystem set, the enhanced software service subsystem set, and the hardware service subsystem set can be tailored by subsystem, and each subsystem can be tailored by function.

The kernel layer includes a kernel subsystem and a driver subsystem.

The kernel subsystem adopts a multi-kernel design. A kernel abstract layer (kernel abstract layer, KAL) shields a difference between a plurality of kernels and provides a basic kernel ability for an upper layer, including process/thread management, memory management, file system management, network management, peripheral management, and the like.

The driver subsystem provides a unified peripheral access ability and a driver development and management framework.

FIG. 3A-1 to FIG. 3A-3 are merely a possible example of the software architecture of the electronic device, and does not constitute a limitation on the software architecture of the electronic device. For example, FIG. 3B shows an example of structures of a first device and a second device in the foregoing distributed system, and a control flow direction and a data flow direction between the electronic devices.

As shown in FIG. 3B, the first device may include the following modules.

A cold and hot data module is configured to calculate a cold-hot value of data in the first device according to a cold and hot data model. The cold-hot value of the data may be used to represent a probability, a frequency, and the like of using the data. The first device may determine, based on the cold-hot value of the data, whether the data is cold data or hot data. The cold data is data that is seldom used or less likely to be used by a user, and the hot data is data that is frequently used or more likely to be used by the user. For example, the first device may calculate a cold-hot value of a photo or a video in a gallery application, and determine whether each photo or video is cold data or hot data.

In a possible implementation, a mobile phone may collect statistics on access behavior data of the user on a local file, and use the file access behavior data as a training sample, to train the cold and hot data model.

A data synchronization component (for example, a software development kit (software development kit, SDK)) is configured to: after the first device is networked with another device (for example, the second device), obtain device information of the second device. The device information includes but is not limited to any one or more pieces of the following information: basic information such as a device identifier, a device type, and a device name, and attribute information such as remaining storage space and a device role (whether the device is a data source end/data receive end).

A distributed device management module is configured to manage information about devices in the distributed system. In this embodiment of this application, the distributed device management module is further configured to determine a target device (for example, the second device) from the distributed system based on one or more pieces of device information such as a device type, remaining storage space, and a device role, and recommend the user to migrate the cold data of the first device to the second device, to release storage space of the first device. For example, as shown in FIG. 5, the first device is a mobile phone. The mobile phone may present a card 101, and the card includes an identifier of the second device that can be used to store a to-be-migrated file (for example, an identifier of a Mate Pad, a smart screen, or a Mate X). After detecting that the user taps the identifier of the Mate Pad or the Mate X, the mobile phone may migrate the locally stored cold data to the Mate Pad or the Mate X.

A distributed file system is configured to manage a file stored on each electronic device in the distributed system. In some examples, the distributed file system may migrate cold data (for example, an infrequently-accessed photo) in a media library of the first device to the second device in the distributed system.

A data access adaptation module is configured to manage thumbnails and metadata required for local file browsing. Metadata of a file includes but is not limited to one or more of the following data: a file name, modification time, a file size, an application to which the file belongs, and a path. For example, an infrequently-accessed photo on the first device is migrated to the second device. When the photo is migrated, information such as a thumbnail and metadata of the photo needs to be retained on the first device. In this way, although the photo has been migrated to the second device, the user may browse the thumbnail of the photo on the first device, to achieve experience similar to that of locally accessing and browsing the original photo.

The data access adaptation module is further configured to: after a file (for example, the photo in the gallery) on the first device is migrated to the second device, control the file to be migrated back from the second device.

A local metadata management module is configured to update metadata of a local file. For example, when it is determined that an original file on the first device needs to be migrated to the second device, metadata of the original file may be updated to identify that the original file is a to-be-migrated original file. For another example, after an original file on the first device has been migrated to the second device, metadata of the original file may be updated to identify that the original file has been migrated to the second device.

A distributed metadata management module is configured to update metadata of a file in the distributed system. For example, after a name of the first device is changed, the second device is notified that the name of the first device is changed.

For example, after a file on the first device is migrated to the second device in the distributed system, if content of the file is modified, the second device may notify the distributed metadata management module of the first device to update metadata (for example, modification time of the file) of the file.

For another example, after a file on the first device has been migrated to the second device in the distributed system, if the file is deleted, the second device may notify the distributed metadata management module of the first device to update metadata of the file, to identify that the file has been deleted, or the distributed metadata management module of the first device may delete the metadata of the file.

In this way, the metadata of the file is updated, so that each electronic device in the distributed system may determine a status of the file. This helps manage the file in the distributed system. FIG. 3A-1 to FIG. 3A-3 and FIG. 3B are merely possible examples of the software architecture of the electronic device, and do not constitute a limitation on the software architecture of the electronic device. It may be understood that the structure shown in this embodiment of this application does not constitute a specific limitation on the electronic device. In some other embodiments of this application, the electronic device may include more or fewer components than those shown in the figure, or some components may be combined, or some components may be split, or there may be a different component arrangement. The components shown in the figure may be implemented by hardware, software, or a combination of software and hardware.

The technical solutions in embodiments of this application may be used to perform migration management on data in a distributed system. The following first uses an example in which a mobile phone Mate 40 is a first device, a tablet Mate X is a second device, and a file that needs to be migrated between the devices is a photo or a video in a gallery, to describe a process of managing data migration between the devices.

For example, as shown in (a) in FIG. 4, the mobile phone displays an album interface 10 of a gallery application, and the album interface 10 includes a control 102. After an operation of tapping the control 102 by a user is detected, the mobile phone may display a card 103, and the card 103 may include a setting option. When detecting that the user taps the setting option, the mobile phone may display a setting interface 104 shown in (b) in FIG. 4. The setting interface 104 may include a switch 105, and the switch is used to enable a distributed data management function in embodiments of this application.

In some examples, when the switch 105 is turned on, the mobile phone may subsequently automatically detect a local infrequently-used photo and/or video, and migrate an original file of the local infrequently-used photo and/or video to another available device in a network (for example, a tablet or a notebook computer in the network).

For example, the mobile phone may detect, in an idle time period (for example, at night), a local photo and/or video that is infrequently used by the user, and migrate an original file of the local infrequently-used photo and/or video to another device in the network. The idle time period may be set by the user or the mobile phone.

For another example, when storage space is insufficient, the mobile phone may automatically detect a local infrequently-used photo and/or video, and migrate an infrequently-used original file. Alternatively, in some other examples, when the switch 105 is turned on, the mobile phone may subsequently detect, based on an indication of the user, a local infrequently-used photo and/or video, and migrate an original file of the local infrequently-used photo and/or video to another available device in the network.

Alternatively, in some other examples, when the switch 105 is turned on, the mobile phone may subsequently detect a local infrequently-used photo and/or video in an idle time period or when storage space is insufficient. Then, based on an indication of the user, the mobile phone may migrate an original file of the local infrequently-used photo and/or video to another device in the network. In embodiments of this application, neither a trigger condition for detecting a local infrequently-used file (for example, a photo or a video) by the mobile phone nor a trigger condition for migrating the infrequently-used file is limited.

For example, the user inputs a slide operation on an album interface to trigger the mobile phone to perform file migration. As shown in FIG. 5, after detecting a slide-down operation that is input by the user on the album interface 10, the mobile phone may determine whether there is a locally stored infrequently-used photo and/or video. If there is a locally stored photo and/or video that is infrequently used by the user, the mobile phone may select, from other devices in the network based on information about the other devices in the network, a target device that can be used to store the photo and/or the video, and may display a card 101 shown in FIG. 5. The card 101 may include the available target device.

As shown in FIG. 5, after detecting that the user selects a Mate Pad and the Mate X, the mobile phone (the Mate 40) may migrate the original file of the local infrequently-used photo and/or video to the Mate Pad and the Mate X, to reduce occupation of local storage space.

In FIG. 5, sliding down on the album interface by the user is used as an operation instruction for triggering file migration. In some other embodiments, the electronic device may alternatively display a corresponding control on an interface, and the user may control the corresponding control to trigger a file migration process. For example, as shown in FIG. 6, the album interface 10 may further include a migration control 106. After detecting an operation of tapping the migration control 106 by the user, the mobile phone 1 (the Mate 40) may display the card 101, and the user may select an extended storage device by using the card 101, to trigger the file migration process. A condition for triggering the file migration process is not limited in embodiments of this application.

FIG. 7 shows an interaction process between electronic devices in the foregoing method. As shown in FIG. 7, an example in which a mobile phone 1 locally stores an infrequently-used photo. The process includes the following steps.

S101: The mobile phone 1 determines that there is a locally stored infrequently-used photo.

As mentioned above, the mobile phone 1 may determine, by itself, whether there is a locally stored infrequently-used file (for example, a photo, a video, or a document). Alternatively, the mobile phone 1 may determine, based on an indication of a user, whether there is a locally stored infrequently-used file.

In this example, an example in which the mobile phone 1 determines, based on the indication of the user, whether there is a locally stored infrequently-used file is used. For example, as shown in FIG. 5, when detecting that the user inputs the slide-down operation on the album interface 10, the mobile phone 1 determines whether there is a locally stored infrequently-used file. After determining, the mobile phone 1 determines that there is a locally stored infrequently-used file. In a possible implementation, the mobile phone may collect statistics on access behavior data of the user, and use file access behavior data as a training sample, to train a cold and hot data model. Subsequently, the mobile phone may use the cold and hot data model to determine whether a file is cold data or hot data. If the file is cold data, it indicates that the file is a local infrequently-used file on the mobile phone. If the file is hot data, it indicates that the file is a local frequently-used file. The mobile phone may migrate the cold data (the local infrequently-used file) to another device in a network, to release storage pressure of the mobile phone.

Optionally, the access behavior data may be a dotting log (or referred to as an access log or the like) of a user access behavior. For example, the user accesses a photo 1 at 16: 10, and an access record is generated. The record may further include feature data of the accessed file. For example, the record further includes a size, a type (picture), a photographing location, photographing time, and a label (scenic) of the photo 1. The user accesses a photo 2 at 17:10, and an access record is generated. The record may further include a size, a type (picture), a photographing location, photographing time, and a label (person) of the photo 2. Similarly, a historical access record of the user to a file may constitute a dotting log of a user access behavior.

In this way, the mobile phone may learn a file access habit of the user based on historical access behavior data of the user, for example, learn a frequency of accessing a type of file by the user (which indicates a preference degree of the user for the type of file). The mobile phone may generate, based on the file access habit of the user, the cold and hot data model used to identify cold and hot data. A file that the user prefers to access is hot data, and a file that the user does not prefer to access is cold data.

In a possible implementation, the mobile phone may update the cold and hot data model periodically or according to a specific policy, to improve prediction accuracy of the cold and hot data model.

Optionally, different types of cold and hot data models may be used in different service scenarios.

A model type and a training manner are not limited in embodiments of this application.

In a related technology, a file is migrated according to a fixed rule. For example, only data browsed in recent 30 days is locally stored, and another photo/video is migrated to a cloud. By comparison, in the technical solution in embodiments of this application, the access habit of the user can be dynamically determined, and a range of the cold data (for example, the infrequently-used photo) can be dynamically determined based on the access habit of the user, to intelligently migrate the cold data. Because the cold data is determined based on the data access habit of the user, data that the user prefers to access can be prevented, as much as possible, from being used as cold data, to reduce a probability of incorrectly migrating the data that the user prefers to access.

In some scenarios, S101 is an optional step. For example, in some scenarios, the mobile phone 1 may provide an interaction entrance, so that the user can actively select some data. The mobile phone 1 may directly use the data selected by the user as cold data, and no longer uses the cold and hot data model to determine whether the data is cold data.

S102: The mobile phone 1 determines a target device used to store an original file of the photo. It is assumed that the mobile phone 1 determines that there is a locally stored infrequently-used photo. In this case, the mobile phone 1 needs to determine, from another device in the network, a target device used to store an original file of the photo.

In a possible implementation, the mobile phone 1 may obtain device information of the other devices in the network, and determine the target device from the other devices in the network based on the device information of the other devices in the network. Optionally, the device information includes but is not limited to any one or more pieces of the following information: a device identifier, a device type, a device name, remaining storage space, and a device role (whether the device is a data source end/data receive end).

In some examples, the mobile phone 1 may determine, based on the information about the device in the network according to any one or more of the following rules, a target device used to store the local infrequently-used file.
(1) A large-capacity storage device is preferentially selected as the target device. The large-capacity storage device includes but is not limited to a home storage center and the like. In this way, because this type of storage device has a large amount of available storage space and is insensitive to power consumption, impact of the cold data on performance of the storage device can be reduced as much as possible.
(2) Total remaining storage space of one or more target devices is greater than or equal to storage space required by the cold data.
(3) A personal device like a mobile phone or a tablet with a same account is preferentially selected as the target device. If no personal device exists in the current network or remaining storage space of the personal device is insufficient, a public device like a smart screen may be selected as the target device.
(4) A source device (namely, a device from which data is migrated) cannot be used as the target device (namely, a device to which data is migrated). It is considered that an infrequently-used file that is stored on the source device is migrated only when storage space of the source device is insufficient. Therefore, due to the insufficient storage space, data of another device in the network cannot be migrated to the source device with the insufficient storage space.
(5) A device that is connected to a power supply or powered on is preferentially selected as the target device, so that a source device can migrate an infrequently-used file to the target device when storage space needs to be released.

The foregoing lists only several rules for selecting the target device. It should be understood that any device in the network that can be used to store the infrequently-used file may be used as the target device. A specific determining manner of the target device, a type of the target device, and the like are not limited in embodiments of this application. Optionally, the first device may further migrate the infrequently-used file to a device that matches the infrequently-used file. For example, if a probability that the user accesses a file on the mobile phone 1 is low, but the user may want to browse and use the file on a mobile phone 2, the file on the mobile phone 1 may be migrated to the mobile phone 2.

In this embodiment of this application, the mobile phone 1 may determine, based on the information about the other devices in the network, one or more target devices that have sufficient remaining storage space, and migrate an infrequently-used file on the mobile phone 1 to the target devices, so that not only storage space of the mobile phone 1 can be effectively released, but also storage space of the target devices can be effectively used, thereby improving storage space utilization.

S103: The mobile phone 1 displays a device recommendation list.

In a possible implementation, the mobile phone 1 scores available storage devices in the network based on the information about the other devices in the network and the foregoing one or more rules, and sorts the available storage devices based on scores, to obtain a display recommendation list. A score may be used to identify storage performance of a device. In some examples, a higher score indicates better storage performance of the device.

The device recommendation list includes an identifier of the target device.

For example, as shown in FIG. 5, after determining the target device that can be used to store the infrequently-used photo on the mobile phone 1, the mobile phone 1 may display the card 101. The card 101 may present the device recommendation list, and the device recommendation list includes the identifier of the target device. For example, as shown in FIG. 5, the device recommendation list includes the Mate Pad, the smart screen, and the Mate X that can be used to store the infrequently-used photo on the mobile phone 1. In this way, the user can learn, by using the device recommendation list displayed by the mobile phone 1, recommended devices that are in the electronic device group and that currently can be used to store the infrequently-used photo, so that the user can select the target device from these recommended devices, and trigger the mobile phone 1 to migrate the local infrequently-used photo to the target device, to release storage pressure of the mobile phone 1.

Optionally, the device recommendation list may further include total storage space and/or used storage space and/or remaining storage space of each target device. For example, in FIG. 5, total storage space of the target device Mate Pad is 512 G, and used storage space is 16 G.

S104: The mobile phone 1 detects an operation of selecting the tablet (the Mate Pad) and the mobile phone 2 (the Mate X) from the device recommendation list by the user.

For example, as shown in FIG. 5, when detecting that the user selects the Mate Pad (the tablet) and the Mate X (the mobile phone 2) from the device recommendation list on the card 101, the mobile phone 1 determines that the user wants to migrate the infrequently-used photo to the Mate Pad and the Mate X. In this way, the mobile phone 1 can determine, based on an indication of the user, that the user wants to use the Mate Pad and the Mate X to store the infrequently-used photo, so as to migrate the infrequently-used photo based on a requirement of the user.

S103 and S104 are optional steps. For example, at night, when the user does not use the mobile phone, the mobile phone 1 may determine, through the cold and hot data model, a locally stored infrequently-used photo, and determine a target device used to store the infrequently-used photo. Then, the mobile phone 1 may directly migrate the infrequently-used photo to the target device, and does not prompt the user of the migration. Optionally, on a second day, when the user uses the mobile phone, the mobile phone 1 may prompt the user that the local infrequently-used photo has been migrated to the target device.

S105: The mobile phone 1 sends an original file of the infrequently-used photo to the mobile phone 2 and the mobile phone 1.

For example, as shown in FIG. 6, it is detected that the user selects the mobile phone 2 (the Mate X) and the tablet (the Mate Pad), and the mobile phone 1 determines that the original file of the infrequently-used photo needs to be migrated to the mobile phone 2 and the tablet. In a possible implementation, the mobile phone 1 may divide the infrequently-used photo into two parts, where one part of the infrequently-used photo is migrated to the mobile phone 2, and the remaining part of the infrequently-used photo is migrated to the tablet.

For example, the mobile phone 1 has a total of 500 local infrequently-used photos. The mobile phone 1 may migrate 200 infrequently used photos in the 500 infrequently-used photos to the mobile phone 2, and migrate the remaining 300 infrequently-used photos in the 500 infrequently-used photos to the tablet.

For another example, the mobile phone 1 has a total of 500 local infrequently-used photos. The mobile phone 1 may determine important photos and unimportant photos in the 500 infrequently-used photos, and migrate the important photos to more target devices. For example, the important photos are migrated to N target devices, and the remaining photos (the unimportant photos) are migrated to M target devices. N and M are positive integers, and N is greater than M. For example, the mobile phone 1 migrates 200 important infrequently-used photos in the 500 infrequently-used photos to the mobile phone 2 and the tablet, and migrates the remaining 300 unimportant infrequently-used photos in the 500 infrequently-used photos to the tablet or the mobile phone 2. Optionally, the important infrequently-used photo may be an infrequently-used photo that is infrequently accessed by the user but needs to be prevented from being lost. For example, the user does not frequently view a childhood photo. However, for the user, the childhood photo is important, and needs to be prevented from being lost. Because such an important infrequently-used photo exists, the electronic device may migrate locally stored important cold data (for example, the childhood photo) to a plurality of target devices, to reduce a probability of loss of the important cold data.

Optionally, when there are a plurality of target devices, the mobile phone 1 may determine, based on device information of the target devices, an infrequently-used photo migrated to a device 1 in the target devices and an infrequently-used photo migrated to a device 2 in the target devices. For example, if the remaining storage space of the mobile phone 2 is 240 MB, and the remaining storage space of the tablet is 496 MB, the mobile phone 1 may migrate a majority of the 500 infrequently-used photos (for example, 400 photos) to the tablet, and migrate a few of the 500 infrequently-used photos (for example, the remaining 100 photos) to the mobile phone 2. According to the foregoing solution, the mobile phone 1 may migrate the locally stored infrequently-used file (for example, the infrequently-used photo) to the target device in the same electronic device group. In this way, storage pressure of the mobile phone 1 can be released as much as possible. When there are a plurality of target devices, infrequently-used files on the mobile phone 1 may be migrated to the plurality of target devices. Because the infrequently-used files are allocated to different target devices for storage, storage space of the plurality of target devices can be effectively used, and occupation of large storage space of each target device is avoided as much as possible.

In a possible implementation, although the mobile phone 1 migrates the original file (for example, an original image) of the infrequently-used photo to another device in the network, the mobile phone 1 may locally retain metadata, a thumb thumbnail, and an LCD thumbnail of the infrequently-used photo. In this way, the mobile phone 1 can provide the user with local browsing experience of the infrequently-used photo by using the metadata, the thumb thumbnail, and the LCD thumbnail of the infrequently-used photo.

For example, as shown in FIG. 8, for local infrequently-used photos on the mobile phone 1, the mobile phone 1 migrates original images of the infrequently-used photos to the tablet and the mobile phone 2 in the network, and locally retains thumbnails of the infrequently-used photos. For a local frequently-used photo on the mobile phone 1, the mobile phone 1 does not migrate an original image of the frequently-used photo.

The foregoing method is described by using an example in which the target devices are the mobile phone 2 and the tablet. It should be understood that in some other embodiments, there may be another quantity of target devices, for example, one, three, or more. Types, a quantity, and the like of the target devices are not limited in embodiments of this application.

In the foregoing technical solution, the electronic device may determine one or more appropriate devices in the network, and migrate local cold data to another device in the network. In this way, storage pressure of the electronic device can be effectively relieved while user experience is ensured, and smoothness of the electronic device can be improved.

In addition, there is an association relationship between devices in the network. For example, when the devices in the network belong to a same local area network, an infrequently-used file can be transmitted between the devices more quickly, and a delay is reduced. This helps accelerate release of storage space of the electronic device. In addition, dependency on an external network is reduced, and storage space of the electronic device can still be released when the external network is disconnected or the like. For another example, when a trust relationship has been established between devices in the network, a device migrates local infrequently-used data (cold data) to another device in the network, to ensure security of the cold data as much as possible and reduce a security risk caused by cold data leakage. It can be learned that, in comparison with migrating local data of a device to a cloud server, in this embodiment of this application, the local cold data of the device is migrated or backed up to the another device in the same network, so that a data migration or backup effect with a higher speed, high reliability, or high security can be obtained. S106: The mobile phone 1 updates the metadata of the infrequently-used photo.

After the mobile phone 1 migrates the original file (for example, the original image) of the infrequently-used photo, the metadata of the infrequently-used photo needs to be updated, to identify that the infrequently-used photo is not on the local device. Optionally, the metadata of the infrequently-used photo may include information about a target device to which the infrequently-used photo is migrated.

For example, Table 1 shows some metadata of local photos on the mobile phone 1. It may be determined, based on metadata of each photo, that an original image of a photo 1 on the mobile phone 1 has been migrated to the mobile phone 2, an original image of a photo 2 has been migrated to the mobile phone 2, and the like.

**Table 1**

| Photo | Whether an original image is locally stored | Target device |
|---|---|---|
| Photo 1 | No | Mobile phone 2 |
| Photo 2 | No | Mobile phone 2 |
| ... | ... | ... |
| ... | No | Tablet |
| ... | No | Tablet |

In some scenarios (a scenario 1), the user may need to locally browse the infrequently-used photo that has been migrated from the local device. In this scenario, the method may further include the following steps S108 and S109.

In this embodiment of this application, the metadata of the migrated file is managed, so that when the metadata of the file is separated from the original file, data consistency can be ensured, and each device in the network can learn a current storage location of the original file, so as to perform file management based on the storage location of the original file.

S107: The mobile phone 1 receives a tap operation performed by the user on a first thumbnail of the infrequently-used photo.

In a possible implementation, after the original image of the infrequently-used photo is migrated to the target device in the network, the mobile phone 1 may mark the infrequently-used photo on an interface. For example, as shown in FIG. 9A, the mobile phone 1 displays an album interface 30. The album interface 30 may include one or more album covers, for example, include album covers 301 and 302. The album cover 301 may present "stored on the Mate X", to indicate that an original image of a photo in an album is migrated to the Mate X in the network. Similarly, the album cover 302 may present "stored on the Mate Pad", to indicate that an original image of a photo in an album is migrated to the Mate Pad in the network.

An album cover corresponding to a device may also be considered as an identifier of a folder corresponding to the device. After the album cover is tapped, the electronic device may display information (for example, a thumbnail) about a file stored on the device.

In addition to marking the infrequently-used photo on the album interface, the mobile phone 1 may alternatively mark the infrequently-used photo on another interface. This is not limited in embodiments of this application. For example, as shown in FIG. 9B, the mobile phone 1 presents prompt information 401 on a leftmost screen 40, to prompt the user that the original image of the infrequently-used photo is migrated to the Mate Pad in the network.

Still as shown in FIG. 9A, after detecting that the user taps the album cover 302, the mobile phone 1 may display an interface 303 shown in (a) in FIG. 9C. The interface 303 may include a thumb thumbnail corresponding to each infrequently-used photo migrated to the Mate Pad. For example, the interface 303 includes a thumb thumbnail 304 corresponding to an infrequently-used photo "sport 1". The user may tap the thumb thumbnail 304, to view an LCD thumbnail corresponding to the infrequently-used photo "sport 1".

S108: The mobile phone 1 displays a second thumbnail.

Optionally, the second thumbnail and the first thumbnail are thumbnails of a same type or different types.

For example, as shown in (a) in FIG. 9C, in response to the operation of tapping, by the user, the thumb thumbnail 304 corresponding to the infrequently-used photo "sport 1", the mobile phone 1 displays a browsing interface 305 shown in (b) in FIG. 9C. The browsing interface 305 may include the LCD thumbnail corresponding to the infrequently-used "sport 1". It can be learned that, in this embodiment of this application, although the original image of the infrequently-used photo has been migrated from the local device, because the thumbnail of the infrequently-used photo is still stored locally, the user can implement local normal browsing of the infrequently-used photo by using the local thumbnail.

The foregoing mainly uses an example in which local browsing of a photo is implemented by using a thumb thumbnail and an LCD thumbnail. It should be understood that the thumbnail used to implement local browsing may alternatively be another type of thumbnail. For example, for an infrequently-used picture, only a thumb thumbnail of the infrequently-used picture is retained, and subsequently, the user may implement local browsing by using the thumb thumbnail of the infrequently-used picture. Alternatively, a manner for implementing local picture browsing is not limited thereto.

Scenario 2: The user locally browses an infrequently-used video that has been migrated from the local device.

In a possible implementation, for the infrequently-used video, the mobile phone 1 may locally retain a thumbnail corresponding to each video frame in the infrequently-used video, and migrate an original file of the infrequently-used video to a target device (for example, the mobile phone 2 and the tablet shown in FIG. 10) in the network. Then, the mobile phone 1 may locally play the infrequently-used video by using the locally stored video frame thumbnail.

For example, as shown in FIG. 9A, in response to tapping, by the user, the album cover 301 on the album interface 30, the mobile phone 1 may jump to an interface 50 shown in (a) in FIG. 11. The interface 50 may include a photo and/or a video migrated from the mobile phone 1 (the Mate 40) to the mobile phone 2 (the Mate X), for example, include a video "cross". A cover 5011 of the video "cross" may be a thumb thumbnail corresponding to a video frame (for example, a thumbnail of a first frame) in the video. In response to tapping, by the user, the cover 5011 of the video "cross", the mobile phone 1 may display a playing interface 5022 shown in (b) in FIG. 11. The mobile phone 1 may play, frame by frame on the playing interface 5022, a plurality of thumbnails corresponding to the video "cross", so that the user can locally browse the migrated infrequently-used video "cross".

In another possible implementation, for the infrequently-used video, the mobile phone 1 may locally retain a thumbnail corresponding to a first video frame (a first frame) in the infrequently-used video, and migrate an original file of the infrequently-used video and a thumbnail corresponding to another frame to a target device (for example, the mobile phone 2 and the tablet shown in FIG. 10) in the network. Then, when the user needs to locally browse the infrequently-used video, the mobile phone 1 may learn, based on metadata of the infrequently-used video, that the thumbnail corresponding to the another frame in the infrequently-used video is migrated to the target device, so as to obtain the thumbnail corresponding to the another frame from the target device, and locally play, frame by frame, a plurality of thumbnails corresponding to video frames. Alternatively, when the user needs to locally browse the infrequently-used video, the mobile phone 1 may obtain the original file of the infrequently-used video from the target device, and locally play the infrequently-used video based on the original file.

Scenario 3: The mobile phone 1 migrates back an infrequently-used photo and/or video migrated from the local device.

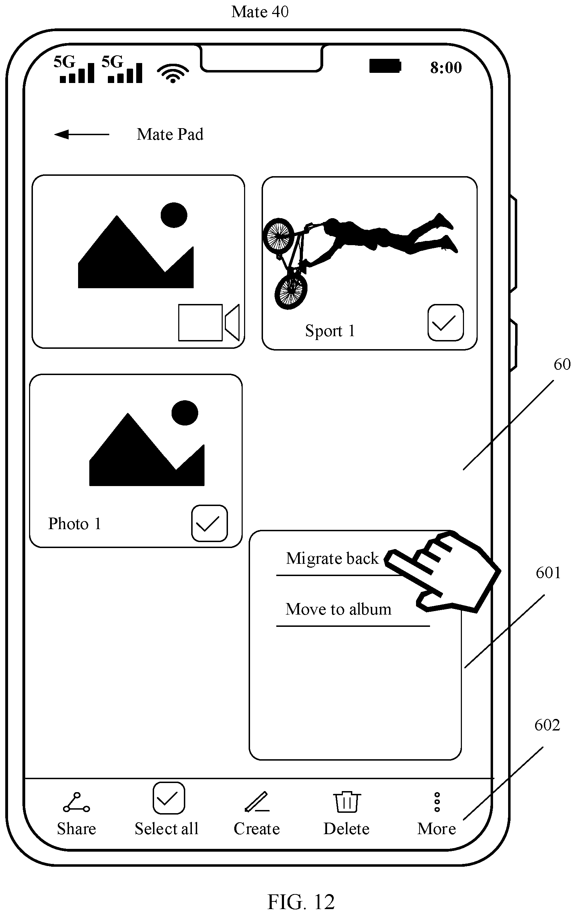

For example, as shown in FIG. 12, the mobile phone 1 displays an interface 60, where the interface 60 includes a local infrequently-used photo and video that have been migrated to the tablet (the Mate Pad). The user may select an infrequently-used photo 1 and a sport 1. Then, when detecting that the user taps a more option 602, the mobile phone 1 may display a card 601, and the card 601 may include a migrate-back option. When detecting an operation of tapping the migrate-back option by the user, the mobile phone 1 may migrate original images of the infrequently-used photo 1 and the sport 1 from the tablet back to the mobile phone 1.

Scenario 4: The user edits the infrequently-used photo on the target device.

It may be understood that, because the original image of the infrequently-used photo is migrated to the target device, the user may also perform a browse operation on the infrequently-used photo on the target device. In addition, because the target device stores the original image of the infrequently-used photo, the user may edit the original image of the infrequently-used photo on the target device.

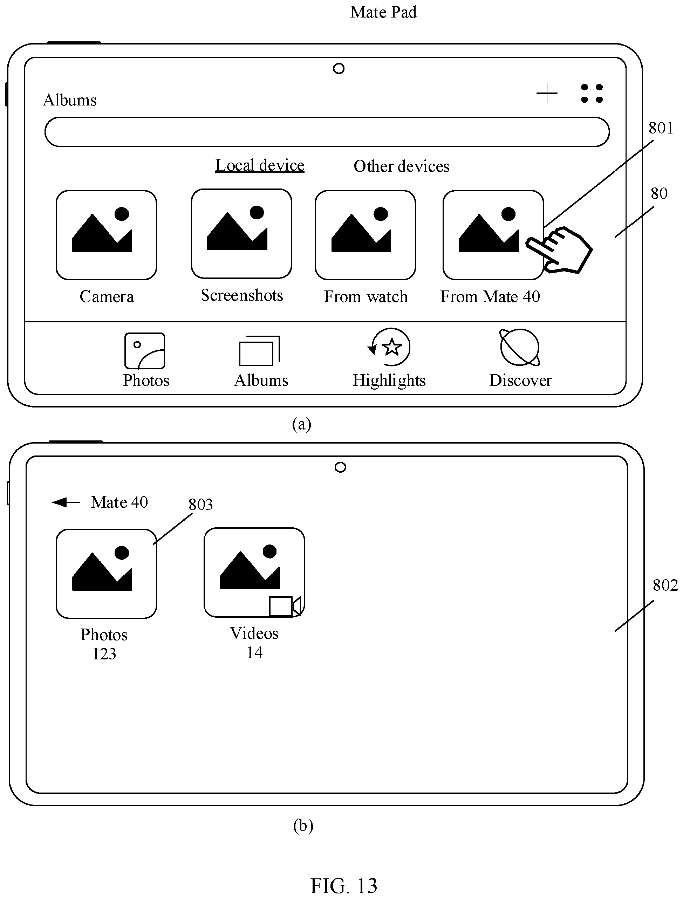

For example, as shown in (a) in FIG. 13, the tablet displays an album interface 80, and the album interface 80 includes covers of one or more albums. For example, a cover of an album 801 is included. The album 801 includes an infrequently-used photo and/or an infrequently-used video migrated from the mobile phone 1 (the Mate 40). When detecting that the user taps the cover of the album 801, the tablet may jump to an interface 802 shown in (b) in FIG. 13. The interface 802 may include album covers of the infrequently-used photo and the infrequently-used video that are migrated from the mobile phone 1 (the Mate 40). For example, the interface 802 may present a cover of an album 803 formed by the infrequently-used photo. The user may tap the cover of the album 803, to trigger the tablet to jump to an interface of the infrequently-used photo.

It can be learned that the tablet can manage a file based on a source device of the file, and classify photos and videos from different devices into different albums. The tablet may alternatively classify photos and videos into different albums based on a file type. In this way, file management efficiency can be improved.

In some embodiments, the user may further edit the infrequently-used photo on the tablet. For example, as shown in (a) in FIG. 14, the tablet displays an editing interface 90. The user may edit an infrequently-used photo displayed on the editing interface 90, and attach an annotation "challenge" to the infrequently-used photo. Then, the tablet may generate, based on an original image corresponding to the edited infrequently-used photo, a thumbnail (for example, a thumb thumbnail or an LCD thumbnail) corresponding to the infrequently-used photo, and synchronize the thumbnail corresponding to the infrequently-used photo to a source device (the mobile phone 1), as shown in (b) in FIG. 14. After receiving the thumbnail corresponding to the infrequently-used photo, the mobile phone 1 may use the new thumbnail to replace a locally stored old thumbnail of the infrequently-used photo. In this way, subsequently, the mobile phone 1 may use the new thumbnail to provide a local browsing service of the infrequently-used photo for the user. In some embodiments, the user may alternatively migrate an infrequently-used file back to the source device through the target device. For example, as shown in FIG. 15, the user may select an infrequently-used photo that needs to be migrated back, and tap a more option. In response to the operation of tapping the more option by the user, the tablet may display a card 601. When detecting that the user taps a migrate-back option on the card 601, the tablet may migrate, from the tablet to the mobile phone 1 (the Mate 40), the infrequently-used photo that is selected by the user.

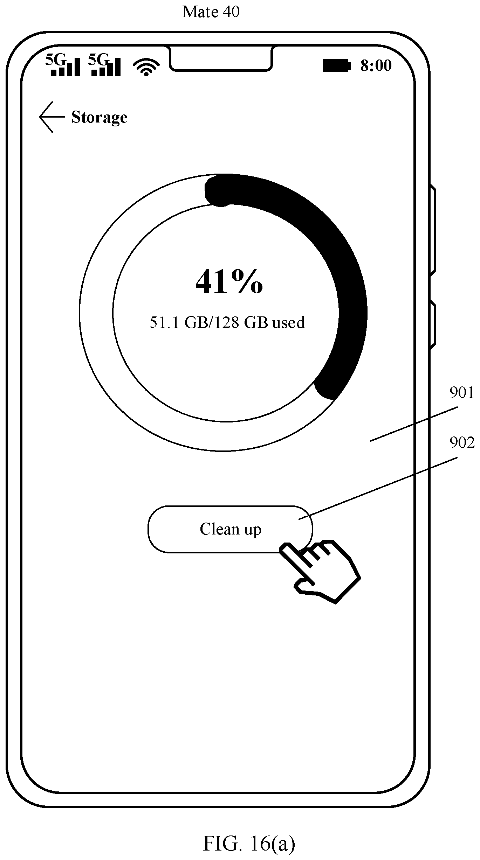

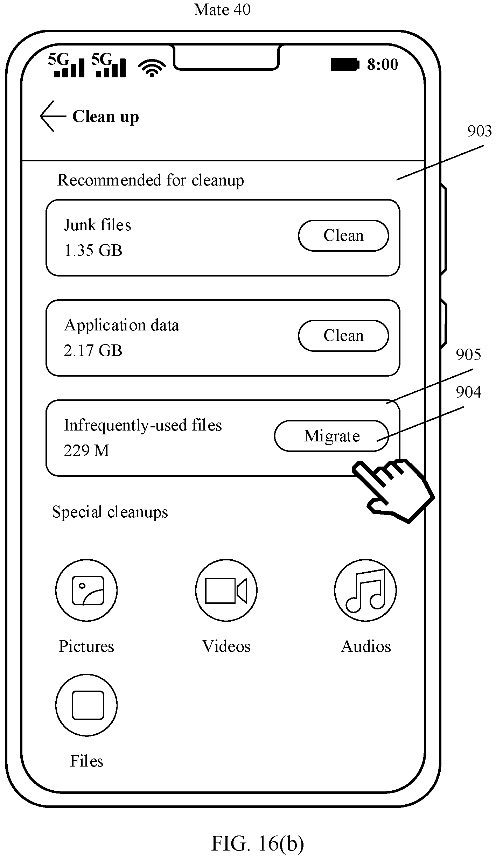

The foregoing mainly uses an example in which the infrequently-used photo and video in the gallery application are migrated. In some other embodiments, the technical solutions in embodiments of this application may also be applied to another application (including a system application and a third-party application) and another type of infrequently-used file. A phone manager application is used as an example. As shown in FIG. 16(a), the mobile phone 1 (the Mate 40) displays an interface 901 in the phone manager application, and the interface 901 may include a clean up button 902. After detecting that the user taps the clean up button 902, the mobile phone 1 may jump to an interface 903 shown in FIG. 16(b), and the interface 903 may include a card 905 of an infrequently-used file.

In some examples, the infrequently-used file may be determined by the mobile phone 1 in an idle time period by using the cold and hot data model. The user may input a slide-down operation on the interface 903, to trigger the mobile phone 1 to use the cold and hot data model again to determine a local infrequently-used file.

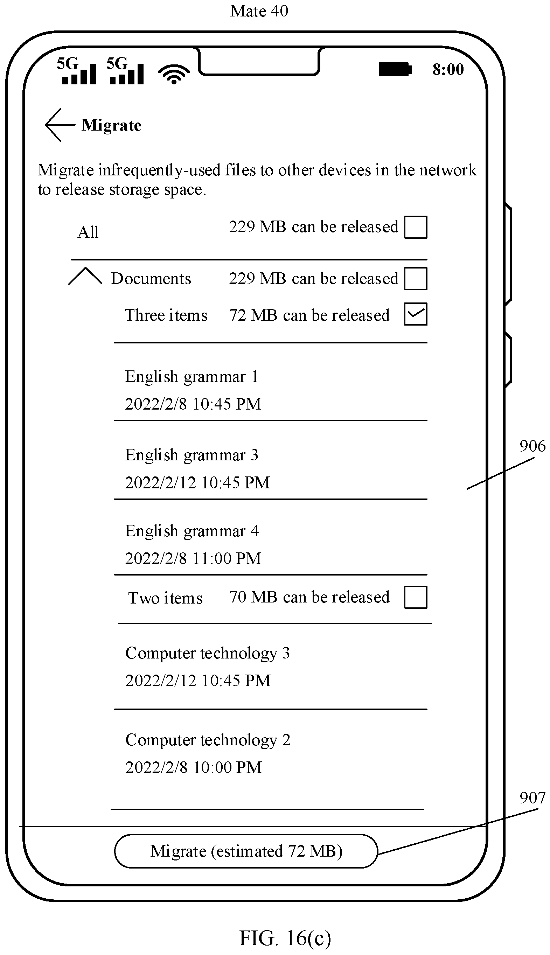

For example, as shown in FIG. 16(b), the card 905 may include a migrate button 904. After detecting that the user taps the migrate button 904, the mobile phone 1 may jump to an interface 906 shown in FIG. 16(c), and the interface 906 may include local infrequently-used files, for example, English grammars 1, 3, and 4, and computer technologies 2 and 3. The user may select some or all infrequently-used files listed on the interface 906. Then, the user may tap a migrate button 907, to trigger the mobile phone 1 to migrate the infrequently-used files (for example, the English grammar 1, 3, and 4) selected by the user from the local device to a target device (for example, the tablet).

Optionally, after detecting that the user taps the migrate button 907, the mobile phone 1 may further present a device recommendation list to the user, so that the user selects, from the device recommendation list, a target device used to store the infrequently-used files.

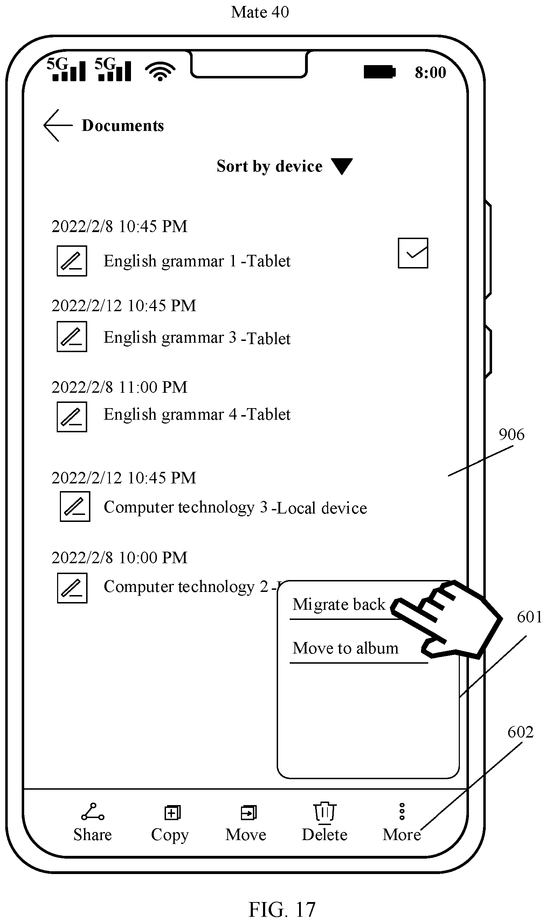

Subsequently, the user may migrate back an infrequently-used file that has been migrated from the mobile phone 1. For example, as shown in FIG. 17, the mobile phone 1 (the Mate 40) displays an interface 906, and the interface 906 may include one or more files. The interface 906 includes file identifiers of the English grammars 1, 3, and 4 that have been migrated to the tablet. The user may select an infrequently-used file that needs to be migrated back, for example, the English grammar 1. Then, the user may tap the more option 602, to trigger the mobile phone 1 to display the card 601. After detecting that the user taps the migrate-back option on the card 601, the mobile phone 1 migrates the English grammar 1 on the tablet back to the mobile phone 1.

Scenario 5: The user edits the infrequently-used photo on the source device.

In some scenarios, the user may need to edit, on the source device, the infrequently-used file that has been migrated from the local device. For example, the user edits the infrequently-used photo that has been migrated from the local device. When an edit operation of the user is detected, the source device may migrate the infrequently-used photo back from the target device to the local device. In this way, the user can locally edit the original image of the infrequently-used photo on the source device, without editing on the target device, to provide convenient and quick file editing experience for the user. In addition, when the source device and the target device are located in a same local area network, if a file is stored by using a server, a delay of downloading a picture is high, and dependency on an external network is high. By comparison, according to the technical solution in embodiments of this application, dependency on the external network is low, and a rate of obtaining an original image of an infrequently-used photo by the source device from the target device is high. This helps improve file editing efficiency.

The foregoing mainly uses an example in which the first device determines local cold and hot data based on the cold and hot data model. In some other embodiments, the first device may further provide an interaction entrance, so that the user may actively select some data, and the first device may migrate the data selected by the user to another device (for example, the second device) in the network.

It should be understood that locations, names, shapes, and the like of elements (for example, a button, an icon, and a text) on UI interfaces corresponding to the foregoing interfaces are not fixed, and may be freely combined or designed based on a requirement.

Some other embodiments of this application provide an apparatus. The apparatus may be the first electronic device, the second electronic device, or a corresponding component. The apparatus may include a display, a memory, and one or more processors. The display and the memory are coupled to the processor. The memory is configured to store computer program code, and the computer program code includes computer instructions. When the processor executes the computer instructions, a terminal may perform the functions or the steps performed by the terminal in the foregoing method embodiments. For a structure of the terminal, refer to the structure of the mobile phone shown in FIG. 2A or the terminal shown in FIG. 2B.

A core structure of the terminal may be represented as a structure shown in FIG. 18. The terminal includes a processing module 1301, an input module 1302, a storage module 1303, and a display module 1304.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of the user electronic device. Specifically, the processing module 1301 may be configured to control, based on a specific trigger condition, content displayed on a primary screen. The processing module 1301 is further configured to process input instructions or data, and determine a display style based on processed data.

The input module 1302 is configured to obtain an instruction or data entered by a user, and transmit the obtained instructions or data to another module of the electronic device. Specifically, an input manner of the input module 1302 may include a touch, a gesture, proximity to a screen, or the like, or may be a voice input. For example, the input module may be a screen of the electronic device, and may obtain an input operation of the user, generate an input signal based on the obtained input operation, and transmit the input signal to the processing module 1301.

The storage module 1303 may include a volatile memory and/or a non-volatile memory. The storage module is configured to store at least one related instruction or data of another module of the user terminal device. Optionally, the storage module may record related data of an application. The data of the application includes but is not limited to a status of the application, an identifier of the application, an installation package, a download link, and an upgrade package.

The display module 1304 may include, for example, a liquid crystal display (LCD), a light-emitting diode (LED) display, an organic light-emitting diode (OLED) display, a micro-electro-mechanical system (MEMS) display, or an electronic paper display. The display module is configured to display content (for example, a text, an image, a video, an icon, or a symbol) that can be viewed by the user.

Optionally, a communication module 1305 is further included, and is configured to support a personal terminal in communicating with another personal terminal (through a communication network). For example, the communication module may be connected to a network through wireless communication or wired communication, to communicate with another personal terminal or a network server. The wireless communication may use at least one of cellular communication protocols, such as long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or GNSS.

An embodiment of this application further provides a chip system. As shown in FIG. 19, the chip system includes at least one processor 1401 and at least one interface circuit 1402. The processor 1401 and the interface circuit 1402 may be connected to each other through a line. For example, the interface circuit 1402 may be configured to receive a signal from another apparatus (for example, a memory of an electronic device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the electronic device is enabled to perform the steps in the foregoing embodiments. Certainly, the chip system may further include another discrete component. This is not specifically limited in embodiments of this application.

An embodiment of this application further provides a computer storage medium. The computer storage medium includes computer instructions. When the computer instructions are run on the electronic device, the electronic device is enabled to perform the functions or the steps performed by the mobile phone in the method embodiments.

An embodiment of this application further provides a computer program product. When the computer program product runs on a computer, the computer is enabled to perform the functions or the steps performed by the mobile phone in the method embodiments.

The foregoing descriptions about implementations allow a person skilled in the art to clearly understand that, for the purpose of convenient and brief description, division of the functional modules is used as an example for illustration. In actual application, the functions can be allocated to different modules and completed based on a requirement, that is, an inner structure of an apparatus is divided into different functional modules to complete all or some of the functions described above.

In the several embodiments provided in this application, it should be understood that the disclosed apparatuses and methods may be implemented in another manner. For example, the described apparatus embodiment is merely an example. For example, the module or unit division is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may be one or more physical units, may be located in one place, or may be distributed on a plurality of different places. Some or all of the units may be selected based on an actual requirement to achieve an objective of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of embodiments of this application. Any variation or replacement within the technical scope disclosed in embodiments of this application shall fall within the protection scope of embodiments of this application. Therefore, the protection scope of this application shall be subject to the protection scope of the claims.

## Claims

1. A distributed data management system, comprising:
a first electronic device, configured to: display a first interface, wherein the first interface comprises identifiers of one or more to-be-migrated devices; and send a first file to a second electronic device in response to an operation of determining an identifier of the second electronic device from the identifiers of the one or more to-be-migrated devices by a user, wherein the first electronic device and the one or more to-be-migrated devices are located in a same electronic device group; and
the second electronic device, configured to: receive the first file from the first electronic device; and store the first file, wherein
the first electronic device is further configured to: retain metadata corresponding to the first file, wherein the metadata is used to identify that the first file has been migrated to the second electronic device; display a second interface based on the metadata of the first file, wherein the second interface comprises an identifier of a folder corresponding to the second electronic device; and display, in response to an operation performed by the user on the identifier of the folder of the second electronic device, information about the file migrated from the first electronic device to the second electronic device.

2. The system according to claim 1, wherein the first electronic device is configured to send the first file to the second electronic device when storage space of the first electronic device is insufficient.

3. The system according to claim 1 or 2, wherein
the second electronic device is configured to: display a third interface, wherein the third interface comprises identifiers of one or more to-be-migrated devices; and send a second file to the first electronic device in response to an operation of determining an identifier of the first electronic device from the identifiers of the one or more to-be-migrated devices by the user;
the first electronic device is configured to: receive the second file from the second electronic device, and store the second file; and
the second electronic device is further configured to: retain metadata corresponding to the second file, wherein the metadata is used to identify that the second file has been migrated to the first electronic device; display a fourth interface based on the metadata of the second file, wherein the fourth interface comprises an identifier of a folder corresponding to the first electronic device; and display, in response to an operation performed by the user on the identifier of the folder of the first electronic device, information about the file migrated from the second electronic device to the first electronic device.

4. A distributed data management method, applied to a first electronic device, wherein the method comprises:
displaying a first interface, wherein the first interface comprises identifiers of one or more to-be-migrated devices;
sending a first file to a second electronic device in response to an operation of determining an identifier of the second electronic device from the identifiers of the one or more to-be-migrated devices by a user, so that the second electronic device receives and stores the first file, wherein the first electronic device and the one or more to-be-migrated devices are located in a same electronic device group;
retaining metadata corresponding to the first file, wherein the metadata is used to identify that the first file has been migrated to the second electronic device;
displaying a second interface based on the metadata of the first file, wherein the second interface comprises an identifier of a folder corresponding to the second electronic device; and
displaying, in response to an operation performed by the user on the identifier of the folder of the second electronic device in the second electronic device, information about the file migrated from the first electronic device to the second electronic device.

5. The method according to claim 4, wherein the method further comprises:
determining, based on an access habit of the user for a local file, the first file that is infrequently used by the user.

6. The method according to claim 4 or 5, wherein the sending a first file to a second electronic device comprises: sending the first file to the second electronic device when storage space of the first electronic device is insufficient.

7. The method according to any one of claims 4 to 6, wherein the method further comprises:
obtaining device information of a plurality of electronic devices in the electronic device group, and determining the one or more to-be-migrated devices from the plurality of electronic devices based on the device information of the plurality of electronic devices, wherein
the device information comprises any one or more pieces of the following information: a device type, a device name, remaining storage space, and a device role.

8. The method according to any one of claims 4 to 7, wherein before the sending a first file to a second electronic device, the method further comprises:
compressing the first file; and
the sending a first file to a second electronic device comprises: sending a compressed first file to the second electronic device.

9. The method according to any one of claims 4 to 8, wherein after the sending a first file to a second electronic device, the method further comprises:
updating the metadata of the first file, wherein the metadata is used to identify that an original file of the first file is not on the first device, and the metadata is further used to identify that the original file has been migrated to the at least one second electronic device.

10. The method according to any one of claims 4 to 9, wherein after the sending a first file to a second electronic device, the method further comprises:
detecting a migrate-back operation performed by the user on the first file, and migrating the first file from the second electronic device back to the first device based on the metadata corresponding to the first file.

11. The method according to any one of claims 4 to 10, wherein the first file is a first picture, and the method further comprises:
in response to the operation performed by the user on the identifier of the folder of the second electronic device, displaying a thumbnail of the first picture migrated from the first electronic device to the second electronic device.

12. The method according to any one of claims 4 to 11, wherein there are one or more second electronic devices.

13. The method according to any one of claims 4 to 12, wherein devices in a same electronic device group comprise devices in a same local area network, and/or devices in a same electronic device group comprise devices between which a trust relationship has been established.

14. The method according to any one of claims 4 to 13, wherein the method further comprises:
displaying a setting interface, wherein the setting interface is used to enable a distributed data management function.

15. A distributed data management method, applied to a second electronic device, wherein the method comprises:
receiving a first file from a first electronic device;
storing the first file, wherein the first electronic device and the second electronic device are located in a same electronic device group;
displaying a fifth interface, wherein the fifth interface comprises an identifier of a folder corresponding to the first electronic device; and
displaying, in response to an operation performed by a user on the identifier of the folder of the first electronic device, information about the first file migrated from the first electronic device to the second electronic device.

16. The method according to claim 15, wherein after the receiving a first file from a first electronic device, the method further comprises:
receiving an edit operation performed by the user on the first file; and
sending a notification message to the first electronic device, so that the first electronic device updates metadata of the first file.

17. The method according to claim 16, wherein the first file comprises a first picture, and the method further comprises:
sending a thumbnail of the edited first picture to the first electronic device.

18. The method according to any one of claims 15 to 17, wherein after the receiving a first file from a first electronic device, the method further comprises:
detecting a migrate-back operation performed by the user on the first file, and migrating an original file of the first file back to the first electronic device.

19. The method according to any one of claims 15 to 18, wherein the electronic device group further comprises a third electronic device, and the method further comprises:
receiving a third file from the third electronic device; and
storing the third file.

20. An electronic device, wherein the electronic device comprises a memory and one or more processors, the memory is coupled to the processor, the memory is configured to store computer program code, the computer program code comprises computer instructions, and when the processor executes the computer instructions, the one or more processors perform the method according to any one of claims 4 to 19.

21. A computer-readable storage medium, wherein the computer-readable storage medium stores instructions, and when the instructions are run on a terminal, the terminal is enabled to perform the method according to any one of claims 4 to 19.
